# EUROPEAN PATENT SPECIFICATION

(11) **EP 1 087 290 B1**
(45) Date of publication and mention of the grant of the patent: **05.11.2003**
(21) Application number: 00120154.0
(22) Date of filing: 21.09.2000
(51) Int. Cl.: G06F 7/02

(54) **Absolute value comparator**
Absolutwertvergleicher
Comparateur de valeur absolue

(30) Priority: 22.09.1999 JP 26956699
(43) Date of publication of application: 28.03.2001
(73) Proprietor: MATSUSHITA ELECTRIC INDUSTRIAL CO., LTD., Kadoma-shi, Osaka 571-8501 (JP)
(72) Inventor: Fujimoto, Masakazu, Osaka-shi, Osaka 555-0025 (JP); Matsumoto, Michihiro, Ashiya-shi, Hyogo 659-0014 (JP)
(74) Representative: Schwabe - Sandmair - Marx

(56) References cited:
- JP-A- 10 161 850
- US-A- 3 829 671
- T. NGUYEN: "Practical Hardware Solutions for 2's Complement Arithmetic Problems" COMPUTER DESIGN., vol. 18, no. 7, July 1979 (1979-07), pages 105-112, XP002155644 PENNWELL PUBL. LITTLETON, MASSACHUSETTS., US ISSN: 0010-4566

## Description

### BACKGROUND OF THE INVENTION

### 1. FIELD OF THE INVENTION:

The present invention relates a calculation device for performing processing for finding which of two pieces of data has a larger absolute value in order to find data having the maximum absolute value among a plurality of data, a calculation method for performing such processing using the calculation device, and a processor including such a calculation device. Specifically, the present invention relates to a calculation device usable for compressing AV data such as digitized music data, comparison of absolute values of which is a large load; a calculation method for performing such processing using the calculation device; and a processor including such a calculation device.

### 2. DESCRIPTION OF THE RELATED ART:

In current AV systems, signals are often processed as digital signals. A digital signal is less influenced by ambient noise than an analog signal, and thus can be reproduced very satisfactorily even when being stored in a recording medium such as, for example, a compact disk (CD) or transferred from one location to another. In order to store in a recording medium or transfer the digital data having such superb characteristics in a larger amount, compression of digital data is indispensable. The MPEG (Moving Picture Experts Group) has been established to standardize compression technology. The compression formats standardized by MPEG include MPEG1 and MPEG2 for compressing moving picture signals and MPEG-Audio for compression audio signals.

In accordance with the MPEG-Audio format, an audio signal is compressed as follows.

Audio data in a time region is converted into data in 32 equivalent frequency bands. Then, data in each frequency band is separated into a waveform and a magnification ratio. The waveform is normalized so that the maximum amplitude is close to 1.0 and the normalized waveform is encoded as a sample. In other words, by normalization of the waveform, individual value A representing the waveform signal without spoiling the similarity in shape is within the range of -1≤A<1. The magnification ratio at the time of normalization is also coded as a scale factor. After that, preferable bits are assigned to the data at a highest quantization precision distinguishable by the human ear in consideration of the human hearing characteristics. Thus, the data compression is performed.

It is necessary to represent the size of a waveform signal in each frequency band by using a certain bit width. In order to represent the sizes of all waveform signals using a minimum bit width without any waste, the minimum absolute value among the absolute values of the waveform signals needs to be found.

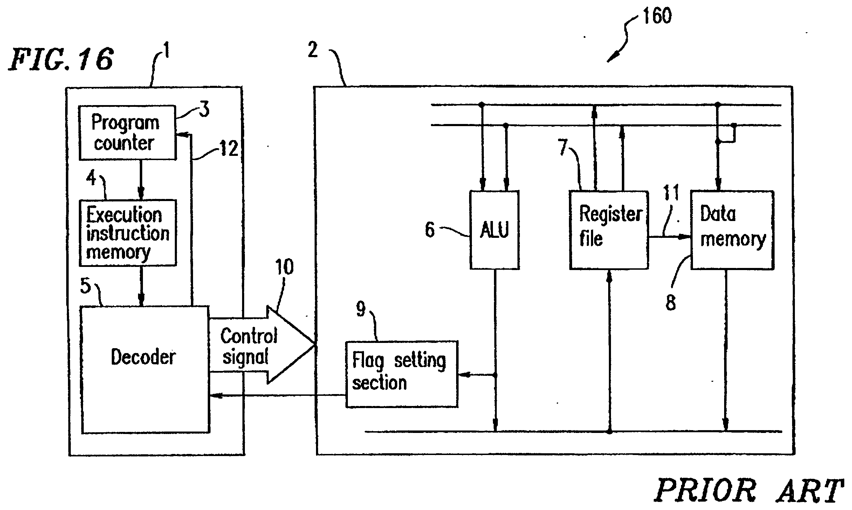

Today, such processing is often performed by a programmable processor. Figure **16** is a block diagram showing a conventional general structure **160** used for finding the maximum absolute value. The processor **160** includes a control section **1**, and a data bus section **2** including an ALU **6** for performing calculations.

The control section **1** includes a program counter **3**, an execution instruction memory **4**, and a decoder **5**. The execution instruction memory **4** has an execution instruction stored as a program. The program counter **3** indicates an address, in the execution instruction memory **4**, storing an execution instruction to be executed next. The program counter **3** is usually incremented by a control signal **12** from the decoder **5**. When a branching instruction or the like is to be performed, the program counter **3** sets the address of the destination of the branching. The decoder **5** outputs a control signal **10** to the data bus section **2** based on the execution instruction from the execution instruction memory **4** and the value of a flag setting section **9**, and also outputs the control signal **12** to the program counter **3**.

The data bus section **2** includes the ALU **6**, a register file **7**, a data memory **8**, and the flag setting section **9**. The ALU **6** performs a calculation based on the control signal **10** on a value output from the register file **7**, and stores the calculation result in the register file **7**. The register file **7** is a collection of a plurality of registers. A register, among the plurality of registers, the content of which is output to the ALU **6** or the data memory **8** is designated by the control signal **10**. The register in which the output from the ALU **6** or the data memory **8** is to be written is designated by the control signal **10**. The content of the designated register is output to the data memory **8** as an address signal **11**.

The register file **7** includes five registers A, B, C, D and P. The data memory **8** is provided for storing data used for calculations. An address in the data memory **8** is designated by the address signal **11**, and an output from the register file **7** is written in the designated address. The content at the address in the data memory **8** designated by the address signal **11** is read and written in the register file **7**. The flag setting section **9** includes an N flag including an N flag register and a Z flag including a Z flag register. The N flag is set to "1" set when the calculation result output from the ALU **6** is negative, and set to "0" otherwise. The Z flag is set to "1" when the calculation result output from the ALU **6** is zero, and set to "0" otherwise.

The bit widths of the registers A, B, C, D and P, the bit width of the data memory **8**, the bit width of data input to and output from the ALU **6**, and the bit width relating to the calculation accuracy are all **4** bits.

The processor has the following execution instructions: "move a, b: data transfer from register b to register a", "movei a, imm: immediate value imm is set in register a", "cmp a, b; data comparison between register a and register b; a subtraction is performed in the ALU **6** but the result is not written in the register (a-b)". "cmpi a, imm: comparison between register i and the immediate value imm; a subtraction is performed in the ALU **6** but the result is not written in the register (a-imm)", "addi a, imm: immediate value imm is added to the value of register a and set in register a", "abs a, b: the absolute value of 2's complement of register b is set in register a", "jmp label: jump to label unconditionally", "jmp(b) label: jump to label when N flag and Z flag are both 0", and "jmp(e) label: jump to label when Z flag is 1".

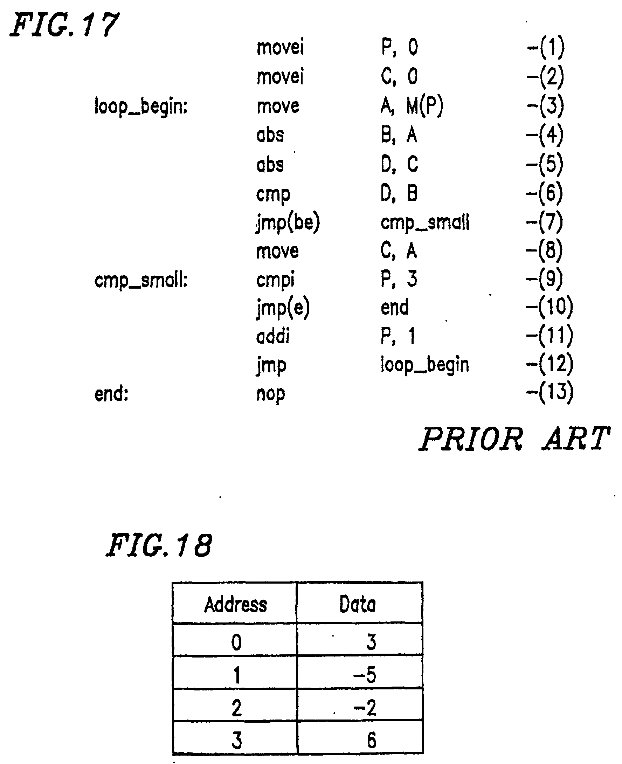

Figure **17** shows a program for performing processing for finding the maximum absolute value using the conventional general processor.

In this example, the data, the maximum absolute value of which is to be found, is stored in the data memory **8** (Figure **16**), more specifically, from address 0 to address 3 in a memory area.

In step (1), 0 (address 0) is set in register P. In step (2), 0, which has the minimum absolute value, is set in register C as dummy data. In step (3), the value of the address indicated by register P is set in register A. In step (4), the result of an absolute value calculation of the value of register A is set in register B. In step (5). the result of an absolute value calculation of the value of register C is set in register D. In step (6), the values of registers D and B are compared. In step (7), when the comparison result in step (6) is positive (N flag-0, Z flag-0), the processing advances to step (9). Otherwise, the processing advances to step (a). In step (8), the value of register A is transfer to register C. In step (9), it is determined whether the address indicated by the value of the register P is an address of the final data of the data group, i.e., is equal to address 3. In step (10), when the determination result in step (9) is yes (Z flag=1), the processing advances to step (13). In step (11), the value of register P is incremented by 1 and the next data is pointed to. In step (12), the processing returns to step (3). In step (13), the processing is terminated. By such processing, the data having the maximum absolute value among the data stored in address 0 to address 3 of the data memory 8 can be found in register C.

In steps (4) through ( **6** ) , the absolute values of two values are compared; and in steps (7) and (8), which of the two values has the larger absolute value is found.

Hereinafter, how the data having the maximum absolute value among four pieces of practical data shown in Figure **18** is found by the program shown in Figure **17** will be described.

In step (1), 0 is set in register P. In step (2), 0 is set in register C.

The processing is performed as follows in a first cycle.

In step (3), the value of the data stored in address {0}, i.e., value "3" is set in register A. In step (4), the result of the absolute value calculation of the value "3" in register A, i.e., value "3" is set in register B. In step (5), the result of the absolute value calculation of the value "0" in register C, i.e., value "0" is set in register D. In step (6), value "0" of register D and value "3" of register B are compared with each other. The comparison (subtraction) result is "0-3=-3", which is negative, and therefore, N flag=1 and Z flag=0 are set. In step (7), since N flag=1 and Z flag=0, the processing advances to step (8). In step (8), value "3" of register A is set in register C. In step-(9), value "0" of register P and the address {3} of the final data are compared with each other. The comparison (subtraction) result is "0-3=-3", which is negative, and therefore, N flag=1 and Z flag-0 are set. In step (10), Z flag=0, and therefore, the processing advances to step (11). In step (11), the value of register P is incremented by 1 to "1". In step (12), the processing returns to step (3).

The processing is performed as follows in a second cycle.

In step (3), the value of the data stored in address {1}, i.e., value "-5" is set in register A. In step (4), the result of the absolute value calculation of the value "-5" in register A, i.e., value "5" is set in register B. In step (5), the result of the absolute value calculation of the value "3" in register C, i.e., value "3" is set in register D. In step (6), value "3" of register D and value "5" of register B are compared with each other. The comparison (subtraction) result is "3-5=-2", which is negative, and therefore, N flag=1 and Z flag-0 are set. In step (7), since N flag=1 and Z flag=0, the processing advances to step (8). In step (8), value "-5" of register A is set in register C. In step (9), value "1" of register P and the address {3} of the final data are compared with each other. The comparison (subtraction) result is "1-3=-2", which is negative, and therefore, N flag=1 and Z flag=0 are set. In step (10), Z flag=0, and therefore, the processing advances to step (11). In step (11), the value of register P is incremented by 1 to "2". In step (12), the processing returns to step (3).

The processing is performed as follows in a third cycle.

In step (3), the value of the data stored in address {2}, i.e., value "-2" is set in register A. In step (4), the result of the absolute value calculation of the value "-2" in register A, i.e., value "2" is set in register B. In step (5), the result of the absolute value calculation of the value "-5" in register C, i.e., value "5" is set in register D. In step (6), value "5" of register D and value "2" of register B are compared with each other. The comparison (subtraction) result is "5-2=3", which is positive, and therefore, N flag=0 and Z flag=0 are set. In step (7), since N flag=0 and Z flag=0, the processing advances to step (9). In step (9), value "2" of register P and the address {3} of the final data are compared with each other. The comparison (subtraction) result is "2-3=-1", which is negative, and therefore, N flag=1 and Z flag=0 are set. In step (10), Z flag=0, and therefore, the processing advances to step (11). In step (11), the value of register P is incremented by 1 to "3". In step (12), the processing returns to step (3).

The processing is performed as follows in a fourth cycle.

In step (3), the value of the data stored in address {3}, i.e., value "6" is set in register A. In step (4), the result of the absolute value calculation of the value "6" in register A, i.e., value "6" is set in register B. In step (5), the result of the absolute value calculation of the value "-5" in register C, i.e., value "5" is set in register D. In step (6), value "5" of register D and value "6" of register B are compared with each other. The comparison (subtraction) result is "5-6=-1", which is negative, and therefore, N flag-1 and Z flag=0 are set. In step (7), since N flag=1 and Z flag=0, the processing advances to step (8). In step (8), value "6" of register A is set in register C. In step (9), value "4" of register P and the address {3} of the final data are compared with each other. The comparison (subtraction) result is "3-3=0", and therefore, N flag=0 and Z flag=1 are set. In step (10), Z flag=1, and therefore, the processing advances to step (13). In step (13), the processing is terminated.

By such processing, the maximum absolute value "6" can be found in register C.

The above-described processing requires many calculations and thus, in a conventional processor, is performed by a special calculation device in order to raise the speed.

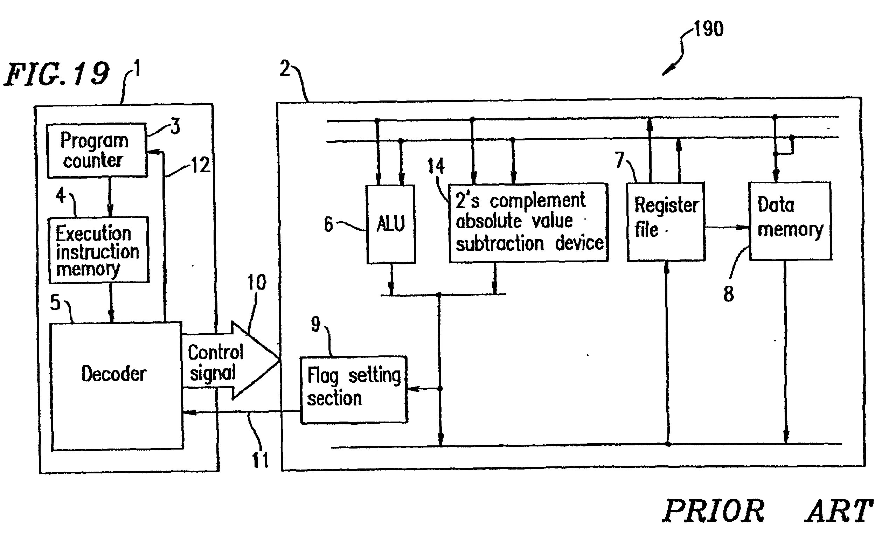

Figure **19** is a block diagram showing a conventional processor **190** including a special calculation device. Like the processor **160**, the processor **190** includes a data bus section **2** and a control section **1** for controlling the data bus section **2**. The control section **1** acts in the same manner as the control section **1** in the processor **160** in Figure **16**. The data bus section **2** includes a 2's complement absolute value subtraction device **14**, which is a special calculation device, in addition to the elements included in the data bus section **2** in the processor **160** shown in Figure **16**. The 2's complement absolute value subtraction device **14** performs 2's complement absolute value subtraction processing on the value output from the register file **7**.

The ALU **6**, the register file **7**, and the data memory **8** act in the same manner as those in the processor **160** (Figure **16**). The flag setting section **9** performs flag setting in the same manner as that in the processor **160** and also reflecting the output from the 2's complement absolute value subtraction device **14**.

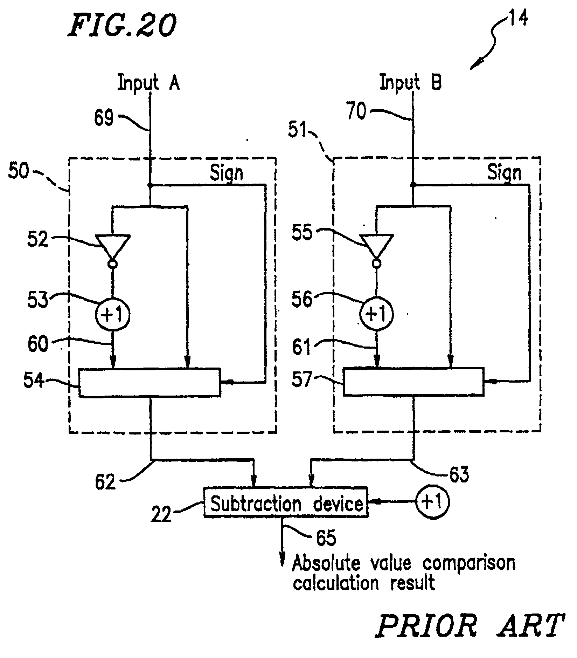

Figure **20** shows a structure of the 2's complement absolute value subtraction device **14**. The 2's complement absolute value subtraction device **14** includes a first 2's complement absolute value calculation device **50**, a second 2's complement absolute value **51**, and a subtraction device **22**. The first 2's complement absolute value calculation device **50** includes an inverter **52**, a +1 adder **53**, and a selector **54**. The inverter **52** inverts all the bite of input data (input **A** represented by reference numeral **69**), and the +1 adder **53** adds "1" to the value output from the inverter **52**. That is, the 2's complement of the input **A** (**69**) is obtained by inverting the bits of the input **A** (**69**) and adding 1 to the inverted bits. Thus, the 2' s complement of the input **A** (**69**) is output as an inverted value **60**. The selector **54** selects the inverted value **60** when the sign of the input **A** (**69**) is negative, and selects the input A (**69**) otherwise. By such processing, when the input **A** (**69**) has a negative value, a positive value having an equal absolute value to the input **A** (**69**) is output (**62**) from the first 2's complement absolute value calculation device **50** (selector **54**). When the input **A** (**69**) has a positive value, the input A (**69**) is output (**62**) as it is from the first 2's complement absolute value calculation device **50** (selector **54**). This processing is referred to as absolute value calculation processing.

Similarly, the second 2's complement absolute value calculation device **51** includes an inverter **55**, a +1 adder **56**, and a selector **57**. The inverter **55** inverts all the bits of input data (input **B** represented by reference numeral **70**), and the +1 adder **56** adds "1" to the value output from the inverter **55**. That is, the 2's complement of the input **B** (**70**) is obtained by inverting the bits of the input **B** (**70**) and adding 1 to the inverted bits. Thus, the 2's complement of the input **B** (**70**) is output as an inverted value **61**. The selector **57** selects the inverted value **61** when the sign of the input **B** (**70**) is negative, and selects the input **B** (**70**) otherwise. By such processing, when the input **B** (**70**) has a negative value, a positive value having an equal absolute value to the input **B** (**70**) is output (**63**) from the second 2's complement absolute value calculation device **51** (selector **57**). When the input **B** (**70**) has a positive value, the input **B** (**70**) is output (**63**) as it is from the second 2's complement absolute value calculation device **51** (selector **57**).

The subtraction device **22** subtracts the post-absolute value calculation value **63** (value obtained as a result of absolute value calculation) from the post-absolute value calculation value **62** and outputs a subtraction result (absolute value comparison calculation result) **65**.

The bit widths of the registers A, B, C, D and P, the bit width of the data memory **8**, and the bit width of data input to and output from the ALU **6** are all 4 bits. The bit width of data input to and output from the 2's complement absolute value subtraction device **14** and the bit width relating to the calculation accuracy are all 4 bits.

In addition to the execution instructions of the processor **160** (Figure **16**). the processor **190** (Figure **19**) has the following execution instruction: "abcmp a, b: comparison between the absolute values of register a and register b; the result is not written in the register (|a|-|b|).

Hereinafter, how the data having the maximum absolute value among four pieces of practical data is found using the processor **190** (Figure **19**) will be described, mainly regarding the "abcmp" instruction using the 2's complement absolute value subtraction device **14** (Figure **20**) included in the processor **190**.

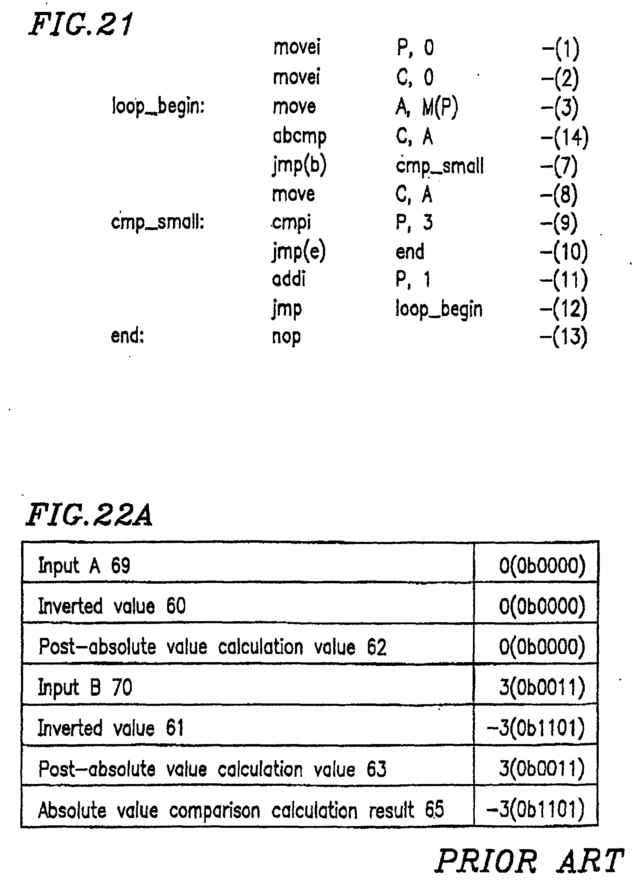

Figure **21** shows a program for performing processing for finding the maximum absolute value using the conventional general processor **190** including the 2's complement absolute value subtraction device **14**. Steps (1) through (3) and (7) through (13) are identical with those performed using the conventional general processor **160**. In step (14), the absolute values of register C and register A are compared with each other using the "abcmp" instruction. In step (14), the processing performed using the conventional general processor **160** in steps (4) through (7) is performed. The value of register C is input as the input **A** (**69**) of the 2's complement absolute value subtraction device **14**, and the value of register A is input as the input **B** (**70**) of the 2's complement absolute value subtraction device **14**.

The data stored in the data memory **8** is represented by 2's complement having a sign bit in the MSB (most significant bit among the 4 bits). The sign of the value of the data is negative when the value of MSB is 1, and is positive when the value of the MSB is 0. When the value of the data is represented in a binary manner, "0b" is put before the bit stream. When the bit stream represents a value, the value is put before "0b".

Since the inputs **A** (**69**) and **B** (**70**) both have 4 bits, the range of the numerical values which can be represented by each of the inputs **A** (**69**) and **B** (**70**) is -8 to 7 (0b1000 to 0b0111).

Now, the program will be specifically described. The processing in steps (1) and (2) is identical with the case of the conventional general processor **160**.

The processing is performed as follows in a first cycle.

In step (3), the processing is identical with the case of the conventional general processor **160**.

In step (14), a calculation using the 2's complement absolute value subtraction device **14** is performed. This will be described with reference to Figure **22A**.

The value of register C, "0(0b0000)" is input as the input **A** (**69**), and the value of register A, "3(0b0011)" is input as the input **B** (**70**).

The value of the input **A** (**69**), "0(0b0000)" is input to the first 2's complement absolute value calculation device **50**. The value is inverted by the inverter **52** and "1" is added to the inverted value by the +1 adder **53**. Thus, the inverted value **60** is "0(0b0000)". The selector **54** determines that the sign of the value of the input **A** (**69**), "0(0b0000)" is zero, and thus selects the input **A** (**69**) and outputs "0(0b0000)" as the post-absolute value calculation value **62**.

The value of the input **B** (**70**), "3(0b0011)" is input to the second 2's complement absolute value calculation device **51**. The value is inverted by the inverter **55** and "1" is added to the inverted value by the +1 adder **56**. Thus, the inverted value **61** is "-3(0b1101)". The selector **57** determines that the sign of the value of the input **B** (**70**), "3(0b0011)" is positive, and thus selects the input **B** (**70**) and outputs "3(0b0011)" as the post-absolute value calculation value **63**.

The subtraction device **22** subtracts the post-absolute value calculation value **63** from the post-absolute value calculation value **62** and outputs "-3(0b1101)" as the absolute value comparison calculation result **65**.

The flag setting section **9** makes a determination on the input value "-3(0b1101)" and sets N flag register=1 and Z flag register-0.

The processing in steps (9) through (11) is identical with the case of the conventional general processor **160**.

The processing is performed as follows in a second cycle.

In step (3), the processing is identical with the case of the conventional general processor **160**.

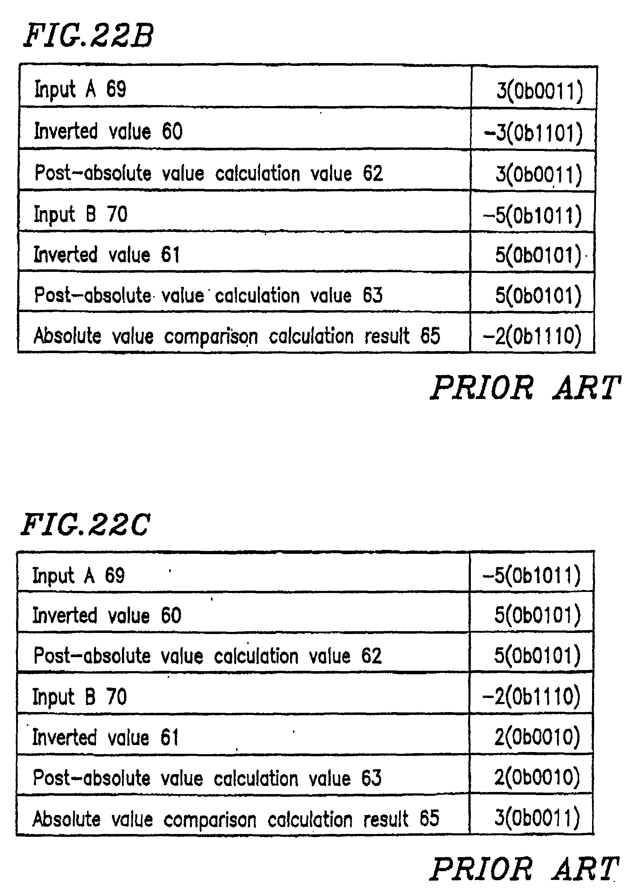

In step (14), a calculation using the 2's complement absolute value subtraction device **14** is performed. This will be described with reference to Figure **22B**.

The value of register C, "3(0b0011)" is input as the input **A** (**69**), and the value of register **A**, "-5(0b1011)" is input as the input **B** (**70**).

The value of the input **A** (**69**), "3(0b0011)" is input to the first 2's complement absolute value calculation device **50**. The value is inverted by the inverter **52** and "1" is added to the inverted value by the +1 adder **53**. Thus, the inverted value **60** is "-3(0b1101)". The selector **54** makes a determination on the sign of the value of the input **A** (**69**), "3(0b0011)", and thus selects the input **A** (**69**) and outputs "3(0b0011)" as the post-absolute value calculation value **62.**

The value of the input **B** (**70**), "-5(0b1011)" is input to the second 2's complement absolute value calculation device **51**. The value is inverted by the inverter **55** and "1" is added to the inverted value by the +1 adder **56**. Thus, the inverted value **61** is "5(0b0101)". The selector **57** makes a determination on the sign of the value of the input **B** (**70**), "-5(0b1011)", and thus selects the inverted value **61** and outputs "5(0b0101)" as the post-absolute value calculation value **63**.

The subtraction device **22**. subtracts the post-absolute value calculation value **63** from the post-absolute value calculation value **62** and outputs "-2(0b1110)" as the absolute value comparison calculation result **65**.

The flag setting section **9** makes a determination on the input value "-2(0b1110)" and sets N flag register=1 and Z flag register=0.

The processing in steps (7) through (12) is identical with the case of the conventional general processor **160**.

The processing is performed as follows in a third cycle.

In step (3), the processing is identical with the case of the conventional general processor **160**.

In step (14), a calculation using the 2's complement absolute value subtraction device **14** is performed. This will be described with reference to Figure **22C**.

The value of register C, "-5(0b1011)" is input as the input **A** (**69**), and the value of register A, "-2(0b1110)" is input as the input **B** (**70**).

The value of the input **A** (**69**), "-5(0b1011)" is input to the first 2's complement absolute value calculation device **50**. The value is inverted by the inverter **52** and "1" is added to the inverted value by the +1 adder **53**. Thus, the inverted value **60** is "5(0b0101)". The selector **54** makes a determination on the sign of the value of the input **A** (**69**), "-5(0b1011)", and thus selects the input **A** (**69**) and outputs "5(0b0101)" as the post-absolute value calculation value **62**.

The value of the input **B** (**70**), "-2(0b1110)" is input to the second 2's complement absolute value calculation device **51**. The value is inverted by the inverter **56** and "1" is added to the inverted value by the +1 adder **56**. Thus, the inverted value **61** is "2(0b0010)". The selector **57** makes a determination on the sign of the value of the input **B** (**70**), "-2(0b1110)", and thus selects the inverted value **61** and outputs "2(0b0010)" as the post-absolute value calculation value **63**.

The subtraction device **22** subtracts the post-absolute value calculation value **63** from the post-absolute value calculation value **62** and outputs "3(0b0011)" as the absolute value comparison calculation result **65**.

The flag setting section **9** makes a determination on the input value "3(0b0011)" and sets N flag register=0 and Z flag register=0.

The processing in steps (7) through (12) is identical with the case of the conventional general processor **160**.

The processing is performed as follows in a fourth cycle.

In step (3), the processing is identical with the case of the conventional general processor **160**.

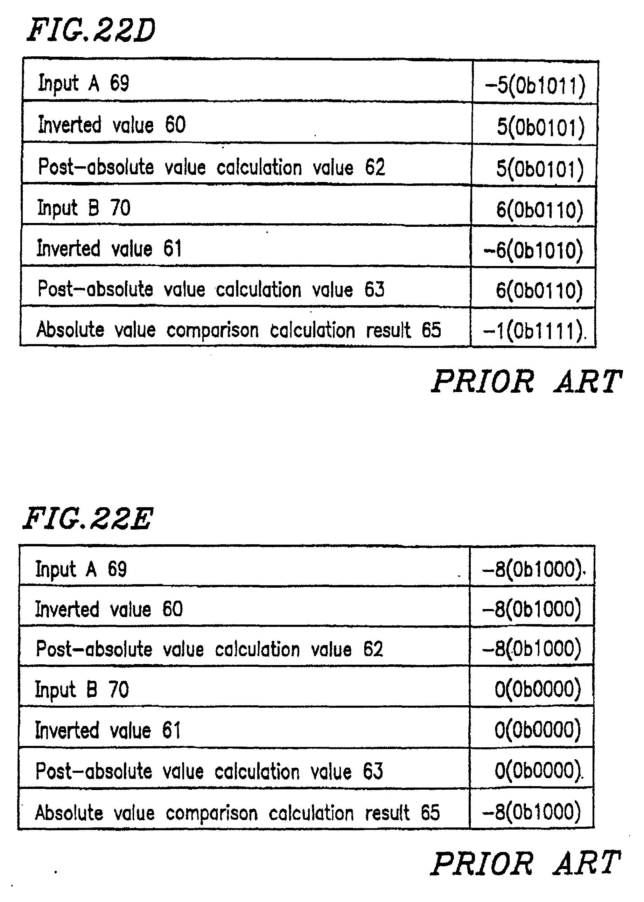

In step (14), a calculation using the 2's complement absolute value subtraction device **14** is performed. This will be described with reference to Figure **22D**.

The value of register C, "-5(0b1011)" is input as the input **A** (**69**), and the value of register A, "6(0b0110)" is input as the input **B** (**70**).

The value of the input **A** (**69**), "-5(0b1011)" is input to the first 2's complement absolute value calculation device **50**. The value is inverted by the inverter **52** and "1" is added to the inverted value by the +1 adder **53**. Thus, the inverted value **60** is " 5(0b0101)". The selector **54** makes a determination on the sign of the value of the input **A** (**69**), "-5(0b1011)", and thus selects the inverted value **60** and outputs "5(0b0101)" as the post-absolute value calculation value **62**.

The value of the input **B** (**70**), "6(0b0110)" is input to the second 2's complement absolute value calculation device **51**. The value is inverted by the inverter **55** and "1" is added to the inverted value by the +1 adder **56**. Thus, the inverted value 61 is "-6(0b1010)". The selector **57** makes a determination on the sign of the value of the input **B** (**70**), "6(0b0110)", and thus selects the input **B** (**70**) and outputs "6(0b0110)" as the post-absolute value calculation value **63**.

The subtraction device **22** subtracts the post-absolute value calculation value **63** from the post-absolute value calculation value **62** and outputs "-1(0b1111)" as the absolute value comparison calculation result **65**.

The flag setting section **9** makes a determination on the input value "-1(0b1111)" and sets N flag register=1 and Z flag register=0.

The processing in steps (7) through (12) is identical with the case of the conventional general processor **160**.

By such processing, the maximum absolute value "6" can be found in register C.

By the conventional processor **190** (Figure **19**), the speed of the calculation is raised using the 2's complement absolute value subtraction device **14** (Figure **20**).

However, the 2's complement absolute value subtraction device **14** has the following problem. When a negative value having the maximum absolute value which can be represented by the prescribed bit width ("-8" in the case where numerical values of -8 to 7 can be represented by the 4 bit width), an inconvenience may occur. An example will be described below with reference to Figure **22E**. In this example, "0(0b0000)" is set in register A and "-8(0b1000)" is set in register C. In step (14), the "abcmp C, A" instruction is performed.

The value of register C, "-8(0b1000)" is input as the input **A** (**69**), and the value of register A, "0(0b0000)" is input as the input **B** (**70**).

The value of the input **A** (**69**), "-8(0b1000)" is input to the first 2's complement absolute value calculation device **50**. The value is inverted by the inverter **52** into "(0b0111)". When "1" is added to the inverted value by the +1 adder **53**, an overflow occurs. Therefore, the +1 adder **53** outputs "-8(0b1000)" as the inverted value **60**. That is, a positive value (absolute value) obtained by inverting "-8(0b1000)" should be found, but the inverted value **60** remains negative due to the overflow. The selector **54** makes a determination on the sign of the value of the input **A** (**69**), "-8(0b1000)", and thus selects the inverted value **60** (which should have a positive sign) but outputs "-8(0b1000)" as the post-absolute value calculation value **62**.

The value of the input **B** (**70**), "0(0b0000)" is input to the second 2's complement absolute value calculation device **51**. The value is inverted by the inverter **55** and "1" is added to the inverted value by the +1 adder **56**. Thus, the inverted value **61** is "0(0b0000)". The selector **57** makes a determination on the sign of the value of the input **B** (**70**), "0(0b0000)", and thus selects the input **B** (**70**) and outputs "0(0b0000)" as the post-absolute value calculation value **63**.

The subtraction device **22** subtracts the post-absolute value calculation value **63** from the post-absolute value calculation value **62** and outputs "-8(0b1000)" as the absolute value comparison calculation result **65**. That is, the result of |-8|-|0| is a negative value.

The flag setting section **9** makes a determination on the input value "-8(0b1000)" and sets N flag register=1 and Z flag register=0.

In step 17), since the N flag register=1 and Z flag register=0, the processing advances to step (8). In step (8), the value of register A, "0(0b0000)" is set in register C.

Comparing "-8(0b1000)" and "0(0b0000)", the absolute value of "-8(0b1000)" is much larger. Therefore, "-8(0b1000)" should be set in register C. With the conventional processor **190** (Figure **19**), a wrong value is obtained due to the overflow.

In order to avoid this, a negative value having the maximum absolute value which can be represented by the prescribed bit width needs to be prevented from being input as the input of the 2's complement absolute value subtraction device **14**. Realizing such setting with hardware requires an additional circuit, which increases the number of circuits and also the size of the circuit substrate. Realizing such setting with software increases the number of steps and thus lowers the calculation speed.

The conventional processor **190** including the 2's complement absolute value subtraction device **14** also has the following problem.

When two values compared have the same absolute value, whichever value appears first remains in register C as the value having the maximum absolute value regardless of the sign. Accordingly, when a negative value (for example, -4) is obtained as the value having the maximum absolute value, it cannot be found whether or not the data includes a positive value having the same absolute value as that of the obtained value (for example, 4).

Here, a plurality of pieces of data (a plurality of numerical figures) represented by 2's complements are made corresponding to values having a certain bit width. The plurality of numerical figures are preferably represented with a smallest possible bit width with no waste. In order to achieve this, data A having the maximum absolute value is obtained from the data group, and the minimum bit width required to represent 2A+1 values, which are included in the range of -A to A including 0, is prepared.

It is assumed that "-4(0b1100)" is obtained in register C as the data having the maximum absolute value using the conventional processor. It cannot be found whether or not the data examined includes "4(0b0100)". Therefore, it should be considered that the data in the range of "-4" to "4" needs to be represented. In order to represent the numerical value of "-4" to "4", 9 values including 0 are required, and the necessary bit width is 4 (0000 to 1000). If it is clear that the data group does not include "4" having the same absolute value as "-4", the range of the numerical values to be represented is "-4" to "3". In order to represent the numerical value of "-4" to "3", 8 values including 0 are required, and the necessary bit width is 3 (000 to 111). Thus, the conventional processor may assign bits unnecessarily.

The 2's complement absolute value subtraction device **14** has the following problem.

The 2's complement absolute value subtraction device **14** includes two +1 adders **53** and **56**. Therefore, the calculation speed of the entire 2's complement absolute value subtraction device **14** is lower by the time required for the addition performed by the two +1 adders **53** and **56**. The use of the two +1 adders **53** and **56** also enlarges the size of the 2's complement absolute value subtraction device **14**.

JP 10-161850 A discloses a digital data comparator having a first selective data inverting circuit inverting a first input data when the sign of the first input data is negative, or outputting the first input data when the sign is positive, a first adding circuit coupled to an output of the first selective data inverting circuit, adding one to the least significant bit when the sign of the first input data is negative, or outputting the first input data when the sign is positive, a second selective data inverting circuit inverting a second input data when the sign of the second input data is positive, or outputting the second input data when the sign is negative, and a second adding circuit adding an output of the first adding circuit and an output of the second selective data inverting circuit.

US 3,829,671 discloses an arithmetic logic circuit for performing an algorithm which approximates the square root of the sum of two squares. A hardware arrangement and a method employ EXCLUSIVE OR circuits instead of a conventional 2's complement arrangement provided by conventional adder-subtractor circuits. The values to be squared are converted to positive value digital signals, compared, and the control signal from a comparison circuit used to command the full value of the larger digital signal and half the value of the smaller digital signal into an adder circuit which receives a correction signal in the event either of the input digital values is negative. The correction signal may be added to the least significant order of the adder output signal or to the next to least significant order depending upon whether the larger or smaller of the digital signals is negative.

### SUMMARY OF THE INVENTION

According to one aspect of the invention, a calculation device for receiving a 2's complement representation of a first value and a 2's complement representation of a second value and outputting information which indicates which of an absolute value of the first value or an absolute value of the second value is larger is provided. The calculation device as defined in independent claim 1 includes a first 1's complement absolute value calculation device for converting the first value into a 1's complement representation and outputting the resultant 1's complement representation when a sign of the first value is negative, and outputting the first value as it is when the sign of the first value is not negative; a second 1's complement absolute value calculation device for converting the second value into a 1's complement representation and outputting the resultant 1's complement representation when a sign of the second value is negative, and outputting the second value as it is when the sign of the second value is not negative: and an indication information output device for outputting indication information which indicates which of the absolute value of the first value or the absolute value of the second value is larger based on the output of the first 1's complement absolute value calculation device and the output of the second 1's complement absolute value calculation device and the calculation device further includes a selection device for outputting either the first value or the second value which has the larger absolute value.

In one embodiment of the invention, when the absolute value of the first value and the absolute value of the second value are equal to each other and the sign of the first value and the sign of the second value are different from each other, the selection device selects and outputs either the first value or the second value which has a positive sign.

In one embodiment of the invention, the indication information output device subtracts the output of the second 1's complement absolute value calculation device from the output of the first 1's complement absolute value calculation device, and outputs the subtraction result.

In one embodiment of the invention, the second 1' s complement absolute value calculation device includes an inversion device for inverting each of bits of the 1's complement representation of the second value when the sign of the second value is negative, and inverting each of bits of the second value when the sign of the second value is positive. The indication information output device obtains a sum of the output of the first 1's complement absolute value calculation device and the output of the second 1's complement absolute value calculation device, adding 1 to the sum, and outputting the addition result.

In one embodiment of the invention, the calculation device further includes a zero value determination device for determining whether the output of the indication information output device is 0 or not, wherein the selection device selects and outputs the second value when the output of the indication information output device is negative or when the output of the indication information output device is 0 and the sign of the second value is negative, and selects and outputs the first value otherwise.

According to another aspect of the invention as defined in independent claim 6, a calculation method for finding which of an absolute value of a 2's complement representation of a first value or an absolute value of a 2's complement representation of a second value is larger is provided. The calculation method includes a first 1's complement absolute value calculation step of converting the first value into a 1's complement representation when a sign of the first value is negative and maintaining the first value as it is when the sign of the first value is not negative; a second 1's complement absolute value calculation step of converting the second value into a 1's complement representation when a sign of the second value is negative and maintaining the second value as it is when the sign of the second value is not negative; and an indication information step of finding indication information which indicates which of the absolute value of the first value or the absolute value of the second value is larger based on the value obtained by the first 1's complement absolute value calculation step and the value obtained by the second 1's complement absolute value calculation step and the calculation method further includes a selection step of selecting either the first value or the second value which has the larger absolute value.

In one embodiment of the invention, the selection step includes the step of, when the absolute value of the first value and the absolute value of the second value are equal to each other and the sign of the first value and the sign of the second value are different from each other, selecting either the first value or the second value which has a positive sign as a value having a larger absolute value.

In one embodiment of the invention, the indication information step includes the step of subtracting the output of the second 1's complement absolute value calculation device from the output of the first 1's complement absolute value calculation device and outputting the subtraction result.

In one embodiment of the invention, the second 1's complement absolute value calculation step includes the step of inverting each of bits of the 1's complement representation of the second value when the sign of the second value is negative, and inverting each of bits of the second value when the sign of the second value is not negative. The indication information output step includes the step of obtaining a sum of the output obtained by the first 1's complement absolute value calculation step and the output obtained by the second 1's complement absolute value calculation step, adding 1 to the sum, and outputting the addition result.

In one embodiment of the invention, the calculation method further includes a zero value determination step of determining whether the output obtained by the indication information step is 0 or not, wherein the selection step includes the step of selecting and outputting the second value as a value having a larger absolute value when the value obtained by the indication information step is negative or when the value obtained by the indication information step is 0 and the sign of the second value is negative, and selecting and outputting the first value otherwise.

According to still another aspect of the invention, a processor includes a data bus section; and a control section for controlling the data bus section. The control section includes an execution instruction storage device for storing an execution instruction, and a decoding device for outputting a control signal obtained by decoding the execution instruction read from the execution instruction storage device. The data bus section includes a calculation device for receiving a 2's complement representation of a first value and a 2's complement representation of a second value and outputting information which indicates which of an absolute value of the first value or an absolute value of the second value is larger. The calculation device includes a first 1's complement absolute value calculation device for converting the first value into a 1's complement representation and outputting the resultant 1's complement representation when a sign of the first value is negative, and outputting the first value as it is when the sign of the first value is not negative; a second 1's complement absolute value calculation device for converting the second value into a 1's complement representation and outputting the resultant 1's complement representation when a sign of the second value is negative, and outputting the second value as it is when the sign of the second value is not negative; and an indication information output device for outputting indication information which indicates which of the absolute value of the first value or the absolute value of the second value is larger based on the output of the first 1's complement absolute value calculation device and the output of the second 1's complement absolute value calculation device.

In one embodiment of the invention, the calculation device further includes a selection device for outputting either the first value or the second value which has the larger absolute value, and the selection device selects and outputs either the first value or the second value which has a positive sign when the absolute value of the first value and the absolute value of the second value are equal to each other and the sign of the first value and the sign of the second value are different from each other.

Thus, the invention described herein makes possible the advantages of providing a calculation device for accurately processing a negative value having the maximum absolute value in the range of numerical values which can be represented with a prescribed bit width and for determining the minimum possible bit width for representing the given data, a calculation method for performing such processing using the calculation device, and a processor including such a calculation device.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram of a processor in a first example according to the present invention;
Figure **2A** is a block diagram of a 1's complement absolute value subtraction device shown in Figure **1**;
Figure **2B** shows a program for performing a calculation according to the present invention;
Figure **2C** shows various numerical values in a first cycle of a first operation example of the processor shown in Figure **1**;
Figure **2D** shows various numerical values in a second cycle of the first operation example of the processor shown in Figure **1**;
Figure **2E** shows various numerical values in a third cycle of the first operation example of the processor shown in Figure **1**;
Figure **2F** shows various numerical values in a fourth cycle of the first operation example of the processor shown in Figure **1**;
Figure **2G** shows various numerical values in a second operation example of the processor shown in Figure **1**;
Figure **2H** shows various numerical values in a third operation example of the processor shown in Figure **1**;
Figure **3A** is a block diagram of a processor in a second example according to the present invention;
Figure **3B** is a block diagram of a 1's complement absolute value subtraction device shown in Figure **3A**;
Figure **3C** shows various numerical values in a first cycle of a first operation example of the processor shown in Figure **3A**;
Figure **3D** shows various numerical values in a second cycle of the first operation example of the processor shown in Figure **3A**;
Figure **3E** shows various numerical values in a third cycle of the first operation example of the processor shown in Figure **3A**;
Figure **3F** shows various numerical values in a fourth cycle of the first operation example of the processor shown in Figure **3A**;
Figure **3G** shows various numerical values in a second operation example of the processor shown in Figure **3A**;
Figure **3H** shows various numerical values in a third operation example of the processor shown in Figure **3A**;
Figure **4** is a block diagram of a processor in a third example according to the present invention;
Figure **5A** is a block diagram of a maximum absolute value calculation device shown in Figure **4**;
Figure **5B** shows a program for performing a calculation performed by the processor shown in Figure **4**;
Figure **5C** shows various numerical values in a first cycle of a first operation example of the processor shown in Figure **4**;
Figure **5D** shows various numerical values in a second cycle of the first operation example of the processor shown in Figure **4**;
Figure **5E** shows various numerical values in a third cycle of the first operation example of the processor shown in Figure **4**;
Figure **5F** shows various numerical values in a fourth cycle of the first operation example of the processor shown in Figure **4**;
Figure **5G** shows various numerical values in a second operation example of the processor shown in Figure **4**;
Figure **5H** shows various numerical values in a third operation example of the processor shown in Figure **4**;
Figure **6A** is a block diagram of a processor in a fourth example according to the present invention;
Figure **6B** is a block diagram of a maximum absolute value calculation device shown in Figure **6A**;
Figure **6C** shows various numerical values in a first cycle of a first operation example of the processor shown in Figure **6A**;
Figure **6D** shows various numerical values in a second cycle of the first operation example of the processor shown in Figure **6A**;
Figure **6E** shows various numerical values in a third cycle of the first operation example of the processor shown in Figure **6A**;
Figure **6F** shows various numerical values in a fourth cycle of the first operation example of the processor shown in Figure **6A**;
Figure **6G** shows various numerical values in a second operation example of the processor shown in Figure **6A**;
Figure **6H** shows various numerical values in a third operation example of the processor shown in Figure **6A;**
Figure **6I** shows various numerical values in a fourth operation example of the processor shown in Figure **6A**;
Figure **6J** shows another set of various numerical values in the fourth operation example of the processor shown in Figure **6A;**
Figure **6K** shows a program for performing a calculation performed by the processor shown in Figure **6A**;
Figure **7** is a block diagram of another l's complement absolute value calculation device usable in the processor shown in Figure **6A**;
Figure **8** is a diagram illustrating a structure of an exclusive OR calculation device included in the l's complement absolute value calculation device shown in Figure **7**;
Figure **9** is a diagram illustrating a structure of an exclusive OR calculation device included in another 1's complement absolute value inversion calculation device usable in the processor shown in Figure **6A**;
Figure **10** is a block diagram of still another l's complement absolute value inversion calculation device usable in the processor shown in Figure **6A**;
Figure **11** shows data group from which the data having the maximum absolute value is obtained;
Figure **12** shows the change of the data selected by the processors according to the present invention and the conventional processor until the data having the maximum absolute value is determined, and the obtained data having the maximum absolute value;
Figure **13** is a block diagram of a processor in a fifth example according to the present invention;
Figure **14** is a block diagram of an ALU included in the processor shown in Figure **13**;
Figure **15** shows different types of calculations performed by the processor shown in Figure **13** and the resultant calculation results;
Figure **16** is a block diagram of a conventional processor;
Figure **17** shows a program for performing a calculation using the conventional processor;
Figure **18** shows data group from which the value having the maximum absolute value is found;
Figure **19** is a block diagram of another conventional processor;
Figure **20** is a block diagram of a 2's complement absolute value subtraction device included in the processor shown in Figure **19**;
Figure **21** shows a program for performing a calculation performed by a processors according to the present invention and the conventional processor;
Figure **22A** shows various numerical values in a first cycle of an operation of the processor shown in Figure **19**;
Figure **22B** shows various numerical values in a second cycle of an operation of the processor shown in Figure **19**;
Figure **22C** shows various numerical values in a third cycle of an operation of the processor shown in Figure **19**;
Figure **22D** shows various numerical values in a fourth cycle of an operation of the processor shown in Figure **19**; and
Figure **22E** shows various numerical values when a negative value having the maximum absolute value is processed by the processor shown in Figure **19**.

### DESCRIPTION OF THE EMBODIMENTS

Hereinafter, the present invention will be described by way of illustrative examples with reference to the accompanying drawings.

In this specification, the expression "converting into a 1's complement representation" is defined as performing a l's complement representation procedure, i.e., defined as inverting all the bits of the input data.

Also in this specification, when data is represented in a binary manner, "0b" is put before the bit stream. When the bit stream represents a value, the value is put before "0b". The sign of the value of the data is negative when the value of the MSB (most significant bit) is 1, and is positive when the value of the MSB is 0. For example, the value "5" in the decimal system is "5(0b0101)" when represented in the binary system with the 2's complement, and also is "5(0b0101)" when represented in the binary system with the 1's complement. The value "-5" in the decimal system is "-5(0b1011)" when represented in the binary system with the 2's complement, and also is "-5(0b1010)" when represented in the binary system with the 1's complement.

In the following examples, elements corresponding to those described regarding the conventional art or in any previously described example will bear identical reference numerals.

### (Example 1)

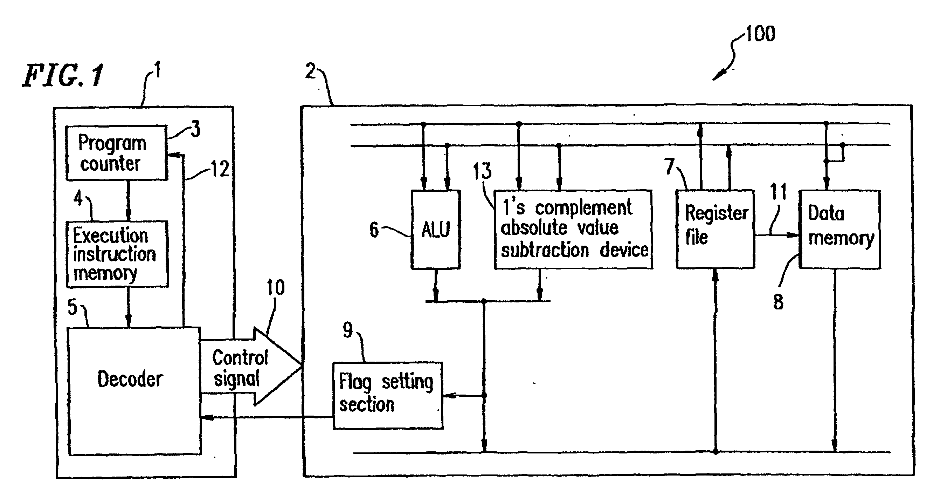

A first example according to the present invention will be described with reference to Figure **1**. Figure **1** is a block diagram of a processor **100** in the first example. The processor **100** includes a data bus section **2** for performing calculations and a control section **1** for controlling the data bus section **2**.

The control section **1** includes a program counter **3**, an execution instruction memory **4**, and a decoder **5**. The program counter **3**, the execution instruction memory **4**, and the decoder **5** are identical with those in the processor **190** (Figure **19**) and detailed descriptions thereof will be omitted.

The data bus section **2** includes an ALU **6**, a 1's complement absolute value subtraction device **13** as a calculation device, a register file **7**, a data memory **8**, and the flag setting section **9**. The ALU **6**, the register file **7**, and the data memory **8**, are identical with those in the processor **190** (Figure **19**) and detailed descriptions thereof will be omitted. The flag setting section **9** includes an N flag register and a Z flag register like that shown in Figure **19**. The conditions for setting flags reflect the calculation result of the ALU **6** and also the subtraction result of the 1's complement absolute value subtraction device **13**.

The 1's complement absolute value subtraction device **13** compares, using the 1's complement, the absolute values of two values respectively stored in two registers in the register file **7** designated by the control signal **10**. The comparison result is output as indication information indicating which one of the two values has the larger absolute value.

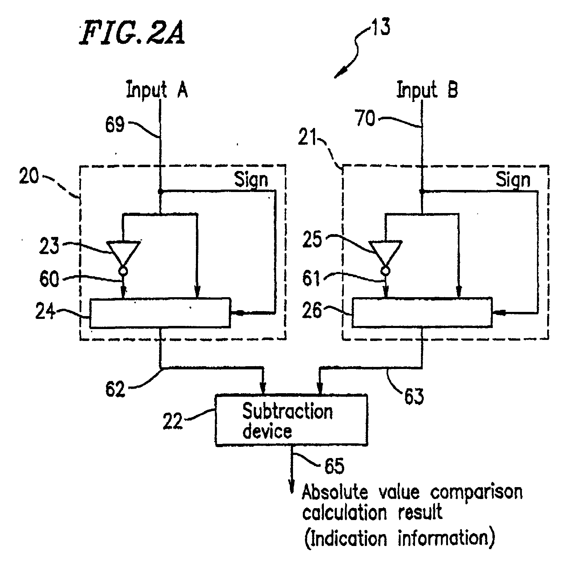

Figure **2A** shows a structure of the 1's complement absolute value subtraction device **13**. The 1's complement absolute value subtraction device **13** includes a first 1's complement absolute value calculation device **20**, a second 1's complement absolute value calculation device **21**, and a subtraction device **22** (as an indication information output device).

The first 1's complement absolute value calculation device **20** performs an absolute value calculation on the input **A** (**69**) using a 1's complement representation procedure and outputs the post-absolute value calculation value **62**. The second 1's complement absolute value calculation device **21** performs an absolute value calculation on the input **B** (**70**) using the 1's complement representation procedure and outputs the post-absolute value calculation value **63**. That is, when the sign of the input value is negative, the first and second 1' s complement absolute value calculation devices **20** and **21** use the 1's complement representation procedure, instead of the 2's complement representation procedure, to invert the input value and output the inverted value. The subtraction device **22** subtracts the post-absolute value calculation value **63** from the post-absolute value calculation value **62** and outputs the absolute value comparison calculation result (indication information) **65**.

The first 1's complement absolute value calculation device **20** includes an inverter **23** and a selector **24**. The inverter **23** inverts all the bits of input data (input **A** (**69**)) (1's complement representation procedure) and outputs the inverted value **60**. The selector **24** selects the inverted value **60** when the sign of the input **A** (**69**) is negative and selects the input **A** (**69**) otherwise. The selected value is output as the post-absolute value calculation value **62**.

The second 1's complement absolute value calculation device **21** includes an inverter **25** and a selector **26**. The inverter **25** inverts all the bits of input data (input **B** (**70**)) (1's complement representation procedure) and outputs the inverted value **61**. The selector **26** selects the inverted value **61** when the sign of the input **B** (**70**) is negative and selects the input **B** (**70**) otherwise. The selected value is output as the post-absolute value calculation value **63**.

The bit widths of the 5 registers A, B, C, D and P, the bit width of the data memory **8**, and the bit width of data input to and output from the ALU **6** are all 4 bits. The bit width of data input to and output from the 1's complement absolute value subtraction device **13** and the bit width relating to the calculation accuracy are all 4 bits.

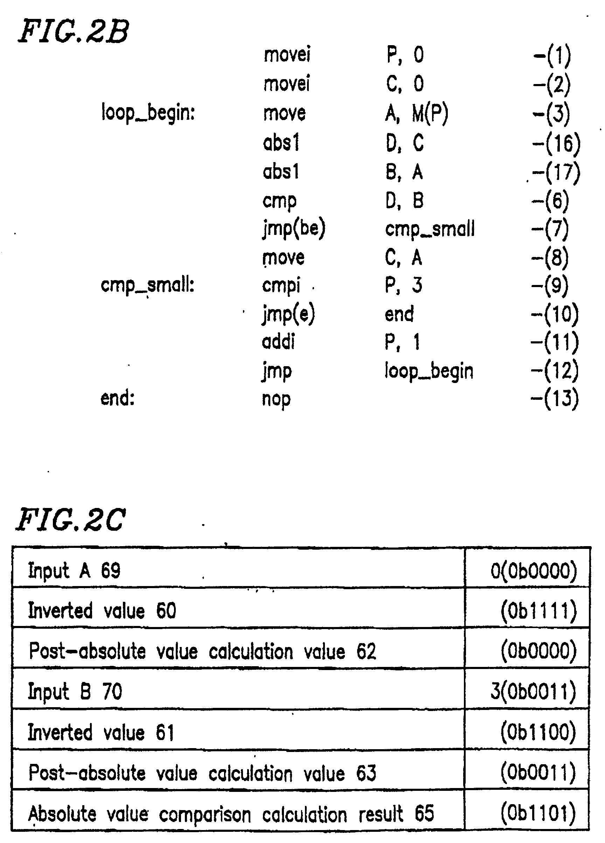

The processor **100** (Figure **1**) has the same execution instructions as those of the processor **190** (Figure **19**). The "abcmp" instruction is performed by the 1's complement absolute value subtraction device **13** (Figures **1** and **2A**). That is, by the "abcmp" instruction, the absolute values of the numerical values obtained by performing the 1's complement representation procedure are compared with each other. Figure **2B** shows a program which represents in detail the processing shown in Figure **21** using a plurality of steps. In this program, "abs1 a, b" is an instruction for obtaining the absolute value of the 1's complement representation of the value in register b and setting the obtained absolute value in register a, and "jmp(be) label" is an instruction for jumping to label when the N flag register=0. Steps (16), (17) and (6) correspond to the "abcmp" instruction.

Hereinafter, an operation of the processor 100 in the first example will be described.

### <Operation example 1>

How the data having the maximum absolute value among four pieces of practical data shown in Figure **18** is found will be described, mainly regarding the "abcmp" instruction using the 1's complement absolute value subtraction device **13** (Figure **2A**).

The processor **100** also uses the program shown in Figure **21** for performing processing for finding the maximum absolute value, like the conventional processor **190** (Figure **19**). In steps (1) and (2), the processing is identical with the case of the conventional processor **190**.

The processing is performed as follows in a first cycle.

In step (3), the processing is identical with the case of the conventional processor **190**.

In step (14), a calculation using the 1's complement absolute value subtraction device **13** is performed. This will be described with reference to Figure **2C**.

The value of register **C**, "0(0b0000)" is input as the input **A** (**69**), and the value of register **A**, "3(0b0011)" is input as the input **B** (**70**).

The value of the input **A** (**69**), "0(0b0000)" is input to the first 1's complement absolute value calculation device **20**. Since all the bits of the value are inverted by the inverter **23**, the inverted value **60** is "(0b1111)". The selector **24** determines that the sign of the value of the input **A** (**69**), 0(0b0000)" is zero, and thus selects the input **A** (**69**) and outputs "(0b0000)" as the post-absolute value calculation value **62**.

The value of the input **B** (**70**), "3(0b0011)" is input to the second 1's complement absolute value calculation device **21**. Since all the bits of the value are inverted by the inverter **25**, the inverted value **61** is "(0b1100)". The selector **26** determines that the sign of the value of the input **B** (**70**), "3(0b0011)" is positive, and thus selects the input **B** (**70**) and outputs "(0b0011)" as the post-absolute value calculation value **63**.

The subtraction device **22** subtracts the post-absolute value calculation value **63** from the post-absolute value calculation value **62** and outputs "(0b1101)" as the absolute value comparison calculation result **65**.

The flag setting section **9** makes a determination on the input value "(0b1101)" and sets N flag register=1 and Z flag register=0.

The processing in steps (7) through (12) is identical with the case of the conventional processor **190**.

The processing is performed as follows in a second cycle.

In step (3), the processing is identical with the case of the conventional processor **190**.

In step (14), a calculation using the 1's complement absolute value subtraction device **13** is performed. This will be described with reference to Figure **2D**.

The value of register C, "3(0b0011)" is input as the input **A** (**69**), and the value of register **A**, "-5(0b1011)" is input as the input **B** (**70**).

The value of the input **A** (**69**), "3(0b0011)" is input to the first 1's complement absolute value calculation device **20**. Since all the bits of the value are inverted by the inverter **23**, the inverted value **60** is "(0b1100)". The selector **24** determines that the sign of the value of the input **A** (**69**), "3(0b0011)" is positive, and thus selects the input **A** (**69**) and outputs "(0b0011)" as the post-absolute value calculation value 62.

The value of the input **B** (**70**), "-5(0b1011)" is input to the second 1's complement absolute value calculation device **21**. Since all the bits of the value are inverted by the inverter 25, the inverted value **61** is "(0b0100)". The selector **26** determines that the sign of the value of the input **B** (**70**), "-5(0b1011)" is negative, and thus selects the inverted value **61** and outputs "(0b0100)" as the post-absolute value calculation value **63**.

The subtraction device **22** subtracts the post-absolute value calculation value **63** from the post-absolute value calculation value **62** and outputs "(0b1111)" as the absolute value comparison calculation result **65**.

The flag setting section **9** makes a determination on the input value "(0b1111)" and sets N flag register=1 and Z flag register=0.

The processing in steps (7) through (12) is identical with the case of the conventional processor **190**.

The processing is performed as follows in a third cycle.

In step (3), the processing is identical with the case of the conventional processor **190**.

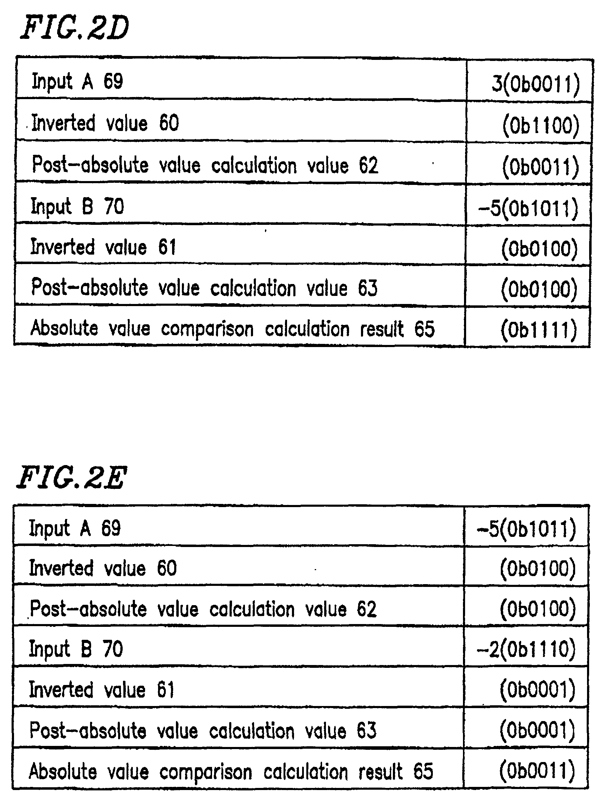

In step (14), a calculation using the 1's complement absolute value subtraction device **13** is performed. This will be described with reference to Figure **2E**.

The value of register C, "-5(0b1011)" is input as the input **A** (**69**), and the value of register **A**, "-2(0b1110)" is input as the input **B** (**70**).

The value of the input **A** (**69**), "-5(0b1011)" is input to the first 1's complement absolute value calculation device **20**. Since all the bits of the value are inverted by the inverter **23**, the inverted value **60** is "(0b0100)". The selector **24** determines that the sign of the value of the input **A** (**69**), "-5(0b1011)" is negative, and thus selects the inverted value **60** and outputs "(0b0100)" as the post-absolute value calculation value **62**.

The value of the input **B** (**70**), "-2(0b1110)" is input to the second 1's complement absolute value calculation device **21**. Since all the bits of the value are inverted by the inverter **25**, the inverted value **61** is "(0b0001)". The selector **26** determines that the sign of the value of the input **B** (**70**), "-2(0b1110)" is negative, and thus selects the inverted value **61** and outputs "(0b0001)" as the post-absolute value calculation value **63**.

The subtraction device **22** subtracts the post-absolute value calculation value **63** from the post-absolute value calculation value **62** and outputs "(0b0011)" as the absolute value comparison calculation result **65**.

The flag setting section **9** makes a determination on the input value "(0b0011)" and sets N flag register=0 and Z flag register=0.

The processing in steps (7) through (12) is identical with the case of the conventional processor **190**.

The processing is performed as follows in a fourth cycle.

In step (3), the processing is identical with the case of the conventional processor **190**.

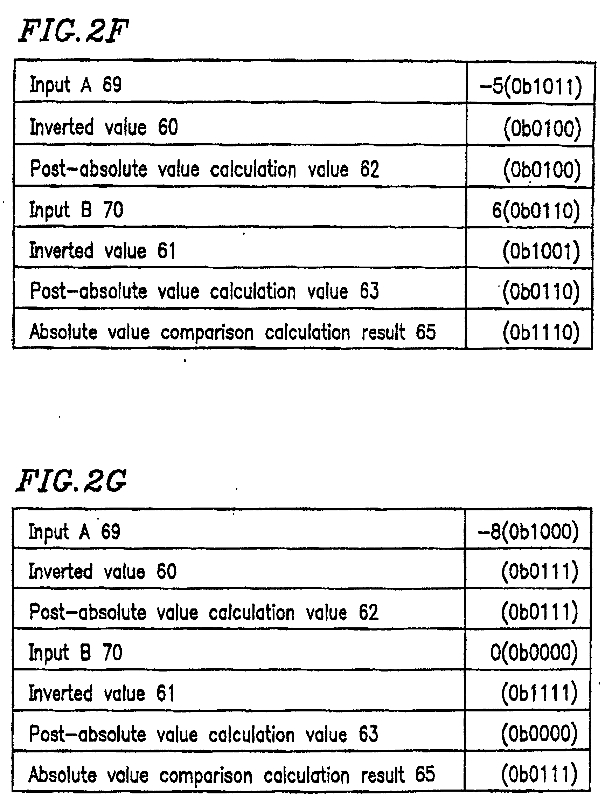

In step (14), a calculation using the 1's complement absolute value subtraction device **13** is performed. This will be described with reference to Figure **2F**.

The value of register C, "-5(0b1011)" is input as the input **A** (**69**), and the value of register A, "6(0b0110)" is input as the input **B** (**70**).

The value of the input **A** (**69**), "-5(0b1011)" is input to the first 1's complement absolute value calculation device **20**. Since all the bits of the value are inverted by the inverter **23**, the inverted value **60** is "(0b0100)". The selector **24** determines that the sign of the value of the input **A** (**69**), "-5(0b1011)" is negative, and thus selects the inverted value **60** and outputs "(0b0100)" as the post-absolute value calculation value **62**.

The value of the input **B** (**70**), "6(0b0110)" is input to the second 1's complement absolute value calculation device **21**. Since all the bits of the value are inverted by the inverter **25**, the inverted value **61** is "(0b1001)". The selector **26** determines that the sign of the value of the input **B** (**70**), "6(0b0110)" is positive, and thus selects the input **B** (**70**) and outputs "(0b0110)" as the post-absolute value calculation value **63**.

The subtraction device **22** subtracts the post-absolute value calculation value **63** from the post-absolute value calculation value **62** and outputs "(0b1110)" as the absolute value comparison calculation result **65**.

The flag setting section **9** makes a determination on the input value "(0b1110)" and sets N flag register=1 and Z flag register=0.

The processing in steps (7) through (12) is identical with the case of the conventional processor **190**.

By such processing, the maximum absolute value "6" can be found in register C using the l's complement representation procedure instead of the 2's complement representation procedure.

### <Operation example 2>

The processing in step (14) when "0(0b0000)" is set in register A and "-8(0b1000)" is set in register C with reference to Figure **2G**. As described above, "-8(0b1000)" is a negative value having the maximum absolute value in the range of numerical values which can be represented by 2's complements of *a* prescribed bit width. With the conventional processor **190**, the overflow occurs and accurate calculation is not possible. The "abcmp C,A" instruction is used.

The value of register C, "-8(0b1000)" is input as the input **A** (**69**), and the value of register A, "0(0b0000)" is input as the input **B** (**70**).

The value of the input **A** (**69**), "-8(0b1000)" is input to the first 1's complement absolute value calculation device **20**. Since all the bits of the value are inverted by the inverter **23**, the inverted value **60** is "(0b0111)". The selector **24** determines that the sign of the value of the input **A** (**69**), "-8(0b1000)" is negative, and thus selects the inverted value **60** and outputs "0(0b0111)" as the post-absolute value calculation value **62**. Thus, the sign is normally inverted without causing an overflow, unlike the processor **190** (Figure **19**).

The value of the input **B** (**70**), "0(0b0000)" is input to the second 1's complement absolute value calculation device **21**. Since all the bits of the value are inverted by the inverter **25**, the inverted value **61** is "(0b1111)". The selector **26** determines that the value of the input **B** (**70**), "0(0b0000)" is zero, and thus selects the input **B** (**70**) and outputs "(0b0000)" as the post-absolute value calculation value **63**.

The subtraction device **22** subtracts the post-absolute value calculation value **63** from the post-absolute value calculation value **62** and outputs "(0b0111)" as the absolute value comparison calculation result **65**. That is, the subtraction result of |-8l-|0| is positive; namely, the comparison between |-8| and |0| is done correctly.

The flag setting section 9 makes a determination on the input value "(0b0111)" and sets N flag register=0 and Z flag register=0.

In step (7), since the N flag register=0 and Z flag register=0, the processing advances to step (9). The value of register A is not set in register C.

In this manner, the processor **100** does not cause an overflow even when the negative value having the maximum absolute value is input, and correctly compares two numerical values.

### <Operation example 3>

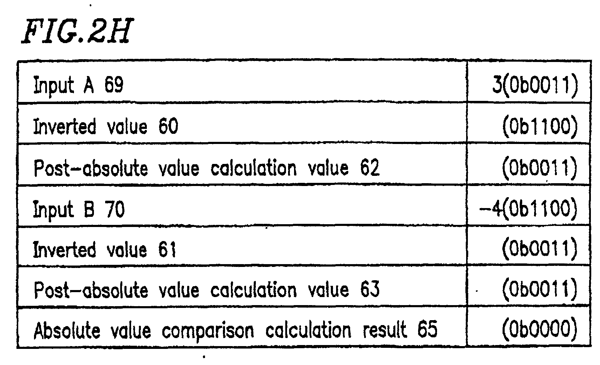

The processing in step (14) when "-4(0b1100)" is set in register A and "3(0b0011)" is set in register C will be described with reference to Figure **2H**. The "abcmp C,A" instruction is used.

The value of register C, "3(0b0011)" is input as the input **A** (**69**), and the value of register **A**, "-4(0b1100)" is input as the input **B** (**70**).

The value of the input **A** (**69**), "3(0b0011)" is input to the first 1's complement absolute value calculation device **20**. Since all the bits of the value are inverted by the inverter **23**, the inverted value **60** is "(0b1100)". The selector **24** determines that the sign of the value of the input **A** (**69**), "3(0b0011)" is positive, and thus selects the input **A** (**69**) and outputs "(0b0011)" as the post-absolute value calculation value **62**.

The value of the input **B** (**70**), "-4(0b1100)" is input to the second 1's complement absolute value calculation device **21**. Since all the bits of the value are inverted by the inverter **25**, the inverted value **61** is "(0b0011)". The selector **26** determines that the value of the input **B** (**70**), "-4(0b1100)" is negative, and thus selects the inverted value **61** and outputs "(0b0011)" as the post-absolute value calculation value **63**.

The subtraction device **22** subtracts the post-absolute value calculation value **63** from the post-absolute value calculation value **62** and outputs "(0b0000)" as the absolute value comparison calculation result **65**.

The flag setting section **9** makes a determination on the input value "(0b0000)" and sets N flag register=0 and Z flag register=1.

In step (7), since the N flag register=0 and Z flag register=1, the processing advances to step (9) . The value of register A, "-4(0b1100)" is not set in register C. The value of the register C remains "3(0b0011)" having the smaller absolute value.

When the "abcmp C,A" instruction is performed in step (14), and where the value of register A is a negative value (for example, -4) and the value of register C is a positive value having the absolute value smaller by 1 than the absolute value of the value of register A (for example, 3), the absolute value comparison calculation result is found as 0. Thus, the comparison of the absolute values is not correctly done. Accordingly, a value having an absolute value which is smaller by 1 than the absolute value which is to be found as the maximum absolute value is incorrectly found as the maximum absolute value. However, audio data is processed with the bit width of 16, and the range of numerical values which can be represented by 16 bits is -32768 to 32767. Even when the obtained absolute value is different from the correct absolute value by 1, the error is about 0.003% with respect to the full range of the 16 bit data and is negligible.

As described above, the processor **100** in the first example according to the present invention can find the maximum absolute value with a negligible error. Even when a negative value having the maximum absolute value among the numerical values which can be represented with 2's complements of a prescribed bit width is input, the calculations can be performed correctly. Since the 1's complement absolute value subtraction device **13** in the processor **100** includes no +1 adder, the size of the 1's complement absolute value subtraction device **13** and also the size of the processor **100** can be reduced. Since the +1 addition which is conventionally performed twice is not performed in the 1's complement absolute value subtraction device **13**, the calculation time required for finding the maximum absolute value among a plurality of pieces of data can be shortened.

### (Example 2)

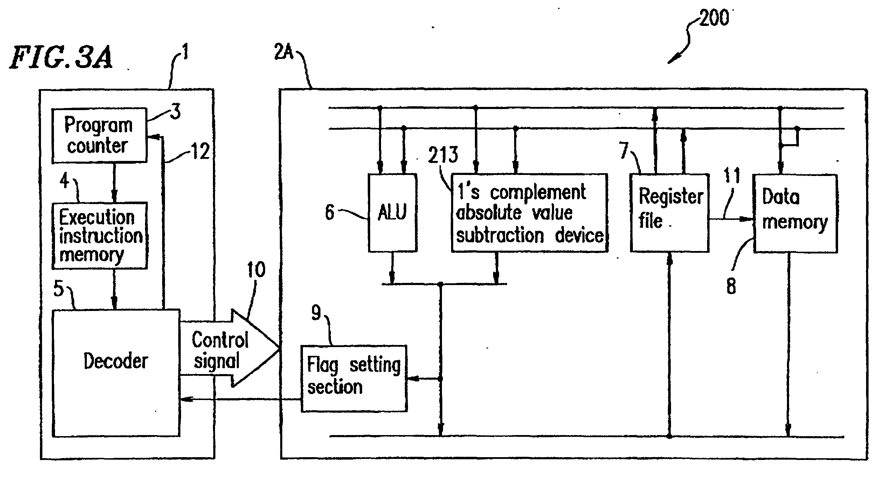

A second example according to the present invention will be described with reference to Figure **3A**. Figure **3A** is a block diagram of a processor **200** in the second example. The processor **200** includes a data bus section **2A** for performing calculations and a control section **1** for controlling the data bus section **2A**. The data bus section **2A** includes 1's complement absolute value subtraction device **213** instead of the 1's complement absolute value subtraction device **13** (Figure **2A**). Except for this, the structure of the processor **200** is substantially identical with that of the processor **100** (Figure **1**).

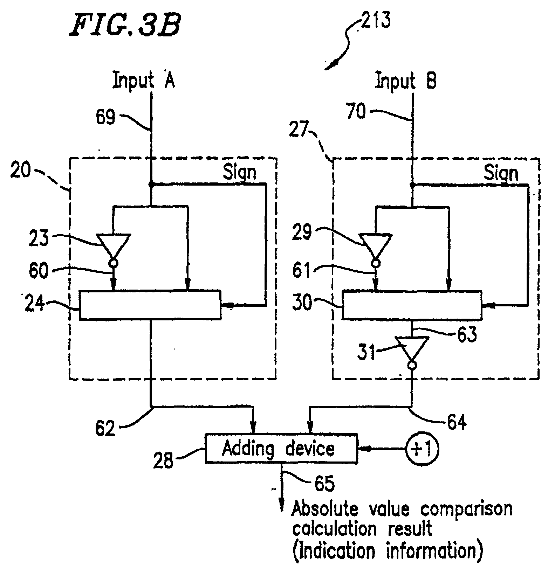

Figure **3B** shows a structure of the 1's complement absolute value subtraction device **213**. The 1's complement absolute value subtraction device **213** includes a first 1's complement absolute value calculation device **20**, a 1's complement absolute value inversion calculation device **27** (acting as a second 1's complement absolute value calculation device and an inversion device), and an addition device **28** (as an indication information output device).

The 1's complement absolute value subtraction device **213** compares, using the 1's complement, the absolute values of two values respectively stored in two registers in the register file **7** designated by the control signal **10**. The comparison result is output as indication information indicating which one of the two values has the larger absolute value.

The first 1's complement absolute value calculation device **20** has the same structure and acts in the same manner as that of the first 1's complement absolute value calculation device **20** in the first example. The 1's a complement absolute value inversion calculation device **27** performs an absolute value calculation on the input **B** (**70**) when the sign of the input **B** (**70**) is negative. Then, the 1's complement absolute value inversion calculation device **27** inverts all the bits of the input **B** (**70**), and outputs the result as a post-absolute value inversion calculation value **64**.

The 1's complement absolute value inversion calculation device **27** includes an inverter **29**, an inverter **31** and a selector **30**. The inverter **29** inverts all the bits of input data (input **B** (**70**)) and outputs the inverted value **61**. The selector **30** selects the inverted value **61** when the sign of the input **B** (**70**) is negative and selects the input **B** (**70**) otherwise. The selected value is output as the post-absolute value calculation value **63**. The inverter **31** inverts all the bits of the post-absolute value calculation value **63** and outputs an inverted value **64**.

The addition device **28** adds the post-absolute value calculation value **62**, the inverted value **64** and "1", and outputs the addition result (absolute value comparison calculation result indicating indication information) **65**.

In the processor **200**, the absolute values are compared by inverting all the bits of the subtraction result, adding the inverted subtraction result to the value before the subtraction, and adding "1" to the addition result, unlike the subtraction performed on two absolute values in the first example.

The processor **200** has the same execution instructions as those of the processor **100** (Figure **1**). The "abcmp" instruction is performed by the l's complement absolute value subtraction device **213** (Figures **3A** and **3B**).

Hereinafter, an operation of the processor **200** in the second example will be described.

### <Operation example 1>

How the data having the maximum absolute value among four pieces of practical data shown in Figure **18** is found will be described, mainly regarding the "abcmp" instruction using the 1's complement absolute value subtraction device **213** (Figure **3B**).

The processor **200** also uses the program shown in Figure **21** for performing processing for finding the maximum absolute value, like the conventional processor **100** (Figure **1**) and the conventional processor **190** (Figure **19**). In steps (1) and (2), the processing is identical with the case of the conventional processor **190**.

The processing is performed as follows in a first cycle.

In step (3), the processing is identical with the case of the conventional processor **190**.

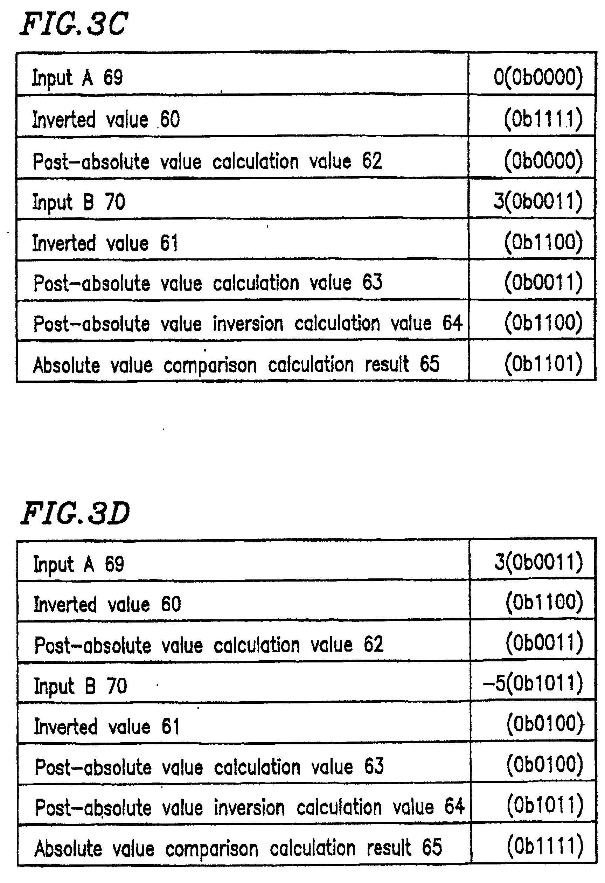

In step (14), a calculation using the l's complement absolute value subtraction device **213** is performed. This will be described with reference to Figure **3C**.

The value of register C, "0(0b0000) is input as the input **A** (**69**), and the value of register A, "3(0b0011)" is input as the input **B** (**70**).

The value of the input **A** (**69**), "0(0b0000)" is input to the first 1's complement absolute value calculation device **20**. Since all the bits of the value are inverted by the inverter **23**, the inverted value **60** is "(0b1111)". The selector **24** determines that the value of the input **A** (**69**), "0(0b0000)" is zero, and thus selects the input **A** (**69**) and outputs "(0b0000)" as the post-absolute value calculation value **62**.

The value of the input **B** (**70**), "3(0b0011)" is input to the 1's complement absolute value inversion calculation device **27**. Since all the bits of the value are inverted by the inverter **29**, the inverted value **61** is "(0b1100)". The selector **30** determines that the sign of the value of the input **B** (**70**), "3(0b0011)" is positive, and thus selects the input **B** (**70**) and outputs "(0b0011)" as the post-absolute value calculation value **63**. The inverter **31** inverts the bits of the post-absolute value calculation value **63** and outputs "(0b1100)" as the post-absolute value inversion calculation value **64**.

The addition device **28** adds the post-absolute value calculation value **62**, the post-absolute value inversion calculation value **64** and "1", and outputs "(0b1101)" as the absolute value comparison calculation result **65**.

The flag setting section **9** makes a determination on the input value "(0b1101)" and sets N flag register=1 and Z flag register=0.

The processing in steps (7) through (12) is identical with the case of the conventional processor **190**.

The processing is performed as follows in a second cycle.

In step (3), the processing is identical with the case of the conventional processor **190**.

In step (14), a calculation using the l's complement absolute value subtraction device **213** is performed. This will be described with reference to Figure **3D**.

The value of register C, "3(0b0011)" is input as the input **A** (**69**), and the value of register A, "-5(0b1011)" is input as the input **B** (**70**).

The value of the input **A** (**69**), "3(0b0011)" is input to the first 1's complement absolute value calculation device **20**. Since all the bits of the value are inverted by the inverter **23**, the inverted value **60** is "(0b1100)". The selector **24** determines that the sign of the value of the input **A** (**69**), "3(0b0011)" is positive, and thus selects the input **A** (**69**) and outputs "(0b0011)" as the post-absolute value calculation value **62**.

The value of the input **B** (**70**), "-5(0b1011)" is input to the 1's complement absolute value inversion calculation device **27**. Since all the bits of the value are inverted by the inverter **29**, the inverted value **61** is "(0b0100)". The selector **30** determines that the sign of the value of the input **B** (**70**), "-5(0b1011)" is negative, and thus selects the inverted value **61** and outputs "(0b0100)" as the post-absolute value calculation value **63**. The inverter **31** inverts the bits of the post-absolute value calculation value **63** and outputs "(0b1011)" as the post-absolute value inversion calculation value **64**.

The addition device **28** adds the post-absolute value calculation value **62**, the post-absolute value inversion calculation value **64** and "1", and outputs "(0b1111)" as the absolute value comparison calculation result **65**.

The flag setting section **9** makes a determination on the input value "(0b1111)" and sets N flag register=1 and Z flag register=0.

The processing in steps (7) through (12) is identical with the case of the conventional processor **190**.

The processing is performed as follows in a third cycle.

In step (3), the processing is identical with the case of the conventional processor **190**.

In step (14), a calculation using the 1's complement absolute value subtraction device **213** is performed. This will be described with reference to Figure **3E**.

The value of register C, "-5(0b1011)" is input as the input **A** (**69**), and the value of register A, "-2(0b1110)" is input as the input **B** (**70**).

The value of the input **A** (**69**), "-5(0b1011)" is input to the first 1's complement absolute value calculation device **20**. Since all the bits of the value are inverted by the inverter **23**, the inverted value **60** is "(0b0100)". The selector **24** determines that the sign of the value of the input **A** (**69**), "-5(0b1011)" is negative, and thus selects the inverted value **60** and outputs "(0b0100)" as the post-absolute value calculation value **62**.

The value of the input **B** (**70**), "-2(0b1110)" is input to the 1's complement absolute value inversion calculation device **27**. Since all the bits of the value are inverted by the inverter **29**, the inverted value **61** is "(0b0001)". The selector **30** determines that the sign of the value of the input **B** (**70**), "-2(0b1110)" is negative, and thus selects the inverted value **61** and outputs "(0b0001)" as the post-absolute value calculation value **63**. The inverter **31** inverts the bits of the post-absolute value calculation value **63** and outputs "(0b1110)" as the post-absolute value inversion calculation value **64**.

The addition device **28** adds the post-absolute value calculation value **62**, the post-absolute value inversion calculation value **64** and "1", and outputs "(0b0011)" as the absolute value comparison calculation result **65**.

The flag setting section **9** makes a determination on the input value "(0b0011)" and sets N flag register=0 and Z flag register=0.

The processing in steps (7) through (**12**) is identical with the case of the conventional processor **190**.

The processing is performed as follows in a fourth cycle.

In step (3), the processing is identical with the case of the conventional processor **190**.

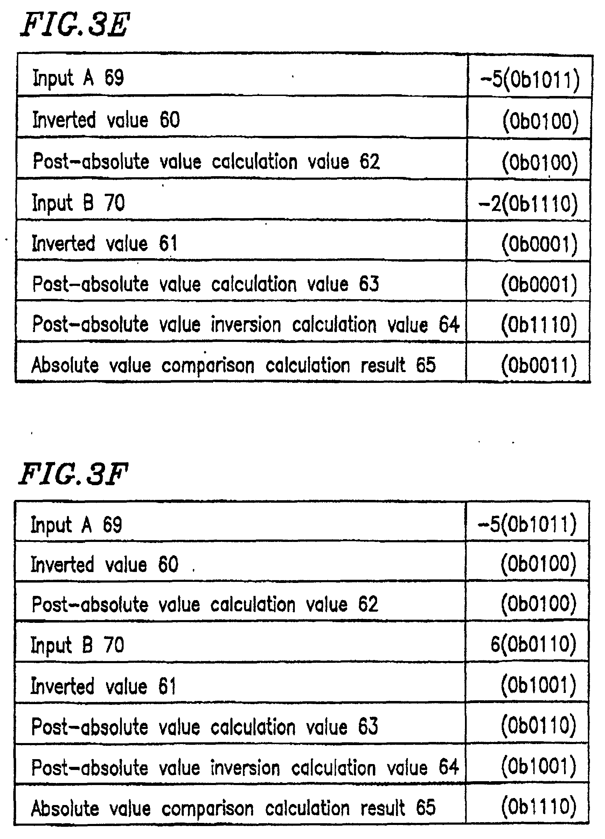

In step (14), a calculation using the 1's complement absolute value subtraction device **213** is performed. This will be described with reference to Figure **3F**.

The value of register C, "-5(0b1011)" is input as the input **A** (**69**), and the value of register A, "6(0b0110)" is input as the input **B** (**70**).

The value of the input **A** (**69**), "-5(0b1011)" is input to the first l's complement absolute value calculation device **20**. Since all the bits of the value are inverted by the inverter **23**, the inverted value **60** is "(0b0100)". The selector **24** determines that the sign of the value of the input **A** (**69**), "-5(0b1011)" is negative, and thus selects the inverted value **60** and outputs "(0b0100)" as the post-absolute value calculation value **62**.

The value of the input **B** (**70**), "6(0b0110)" is input to the 1's complement absolute value inversion calculation device **27**. Since all the bits of the value are inverted by the inverter **29**, the inverted value **61** is "(0b1001)". The selector **30** determines that the sign of the value of the input **B** (**70**), "6(0b0110)" is positive, and thus selects the input **B** (**70**) and outputs "(0b0110)" as the post-absolute value calculation value **63**. The inverter **31** inverts the bits of the post-absolute value calculation value **63** and outputs "(0b1001)" as the post-absolute value inversion calculation value **64**.

The addition device **28** adds the post-absolute value calculation value **62**, the post-absolute value inversion calculation value **64** and "1", and outputs "(0b1110)" as the absolute value comparison calculation result **65**.

The flag setting section **9** makes a determination on the input value "(0b1110)" and sets N flag register=1 and Z flag register=0.

The processing in steps (7) through (12) is identical with the case of the conventional processor **190**.

By such processing, the maximum absolute value "6" can be found in register C using addition instead of subtraction used in the first example.

### <Operation example 2>

The processing in step (14) when "0(0b0000)" is set in register A and "-8(0b1000)" is set in register C with reference to Figure **3G**. As described above, "-8(0b1000)" is a negative value having the maximum absolute value in the range of numerical values which can be represented by 2's complements of a prescribed bit width. With the conventional processor **190**, the overflow occurs and accurate calculation is not possible. The "abcmp C,A" instruction is used.

The value of register C, "-8(0b1000)" is input as the input **A** (**69**), and the value of register A, "0(0b0000)" is input as the input **B** (**70**).

The value of the input **A** (**69**), "-8(0b1000)" is input to the first 1's complement absolute value calculation device **20**. Since all the bits of the value are inverted by the inverter **23**, the inverted value **60** is "(0b0111)". The selector **24** determines that the sign of the value of the input **A** (**69**), "-8(0b1000)" is negative, and thus selects the inverted value **60** and outputs "(0b0111)" as the post-absolute value calculation value **62**. Thus, the sign is normally inverted without causing an overflow, unlike the processor **190** (Figure **19**).

The value of the input **B** (**70**), "0(0b0000)" is input to the 1's complement absolute value inversion calculation device **27**. Since all the bits of the value are inverted by the inverter **29**, the inverted value **61** is "(0b1111)". The selector **30** determines that the value of the input **B** (**70**), "0(0b0000)" is zero, and thus selects the input **B** (**70**) and outputs "(0b0000)" as the post-absolute value calculation value **63**. The inverter **31** inverts the bits of the post-absolute value calculation value **63** and outputs "(0b1111)" as the post-absolute value inversion calculation value **64**.

The addition device **28** adds the post-absolute value calculation value **62**, the post-absolute value inversion calculation value **64** and "1", and outputs "(0b0111)" as the absolute value comparison calculation result **65**. That is, the subtraction result of |-8|-|0| is positive; namely, the comparison between |-8| and |0| is done correctly.

The flag setting section **9** makes a determination on the input value "(0b0111)" and sets N flag register=0 and Z flag register=0.

In step (7), since the N flag register=0 and Z flag register=0, the processing advances to step (9). The value of register A is not set in register C.

In this manner, the processor **200** does not cause an overflow even when the negative value having the maximum absolute value is input, and correctly compares two numerical values.

### <Operation example 3>

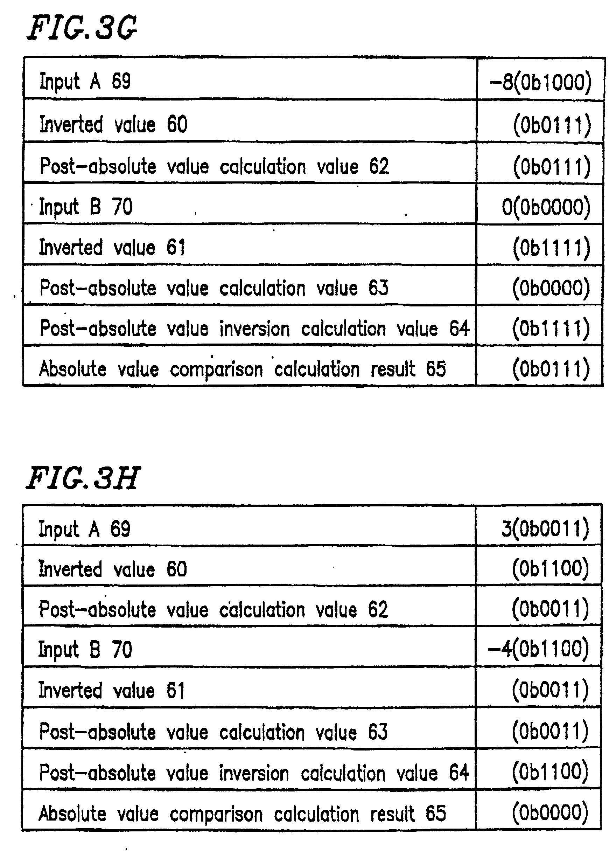

The processing in step (14) when "-4(0b1100)" is set in register A and "3(0b0011)" is set in register C will be described with reference to Figure **3H**. The "abcmp C,A" instruction is used.

The value of register C, "3(0b0011)" is input as the input **A** (**69**), and the value of register A, "-4(0b1100)" is input as the input **B** (**70**).

The value of the input **A** (**69**), "3(0b0011)" is input to the first 1's complement absolute value calculation device **20**. Since all the bits of the value are inverted by the inverter **23**, the inverted value **60** is "(0b1100)". The selector **24** determines that the sign of the value of the input **A** (**69**), "3(0b0011)" is positive, and thus selects the input **A** (**69**) and outputs "(0b0011)" as the post-absolute value calculation value **62**.

The value of the input **B** (**70**), "-4(0b1100)" is input to the 1's complement absolute value inversion calculation device **27**. Since all the bits of the value are inverted by the inverter **29**, the inverted value **61** is "(0b0011)". The selector **30** determines that the value of the input **B** (**70**), "-4(0b1100)" is negative, and thus selects the inverted value **61** and outputs "(0b0011)" as the post-absolute value calculation value **63**. The inverter **31** inverts the bits of the post-absolute value calculation value **63** and outputs "(0b1100)" as the post-absolute value inversion calculation value **64**.

The addition device **28** adds the post-absolute value calculation value **62**, the post-absolute value inversion calculation value **64** and "1", and outputs "(0b0000)" as the absolute value comparison calculation result **65**.

The flag setting section **9** makes a determination on the input value "(0b0000)" and sets N flag register=0 and Z flag register=1.

In step (7), since the N flag register=0 and Z flag register=1, the processing advances to step (9). The value of register A, "-4(0b1100)" is not set in register C. The value of the register C remains "3(0b0011)" having the smaller absolute value.

When the "abcmp C,A" instruction is performed in step (14), and where the value of register A is a negative value (for example, -4) and the value of register C is a positive value having the absolute value smaller by 1 than the absolute value of the value of register A (for example, 3), the absolute value comparison calculation result is found as 0. Thus, the comparison of the absolute values is not correctly done. Accordingly, a value having an absolute value which is smaller by 1 than the absolute value which is to be found as the maximum absolute value is incorrectly found as the maximum absolute value. However, audio data is processed with the bit width of 16, and the range of numerical values which can be represented by 16 bits is -32768 to 32767. Even when the obtained absolute value is different from the correct absolute value by 1, the error is about 0.003% with respect to the full range of the 16 bit data and is negligible.

As described above, the processor **200** in the second example according to the present invention can find the maximum absolute value with a negligible error. Even when a negative value having the maximum absolute value among the numerical values which can be represented with 2's complements of a prescribed bit width is input, the calculations can be performed correctly. Since the 1's complement absolute value subtraction device **213** in the processor **200** includes only one +1 adder (addition device **28**), the size of the 1's complement absolute value subtraction device **213** and also the size of the processor **200** can be maintained relatively small. Since the +1 addition which is conventionally performed twice is performed only once in the 1's complement absolute value subtraction device **213**, the calculation time required for finding the maximum absolute value among a plurality of pieces of data can be shortened.

### (Example 3)

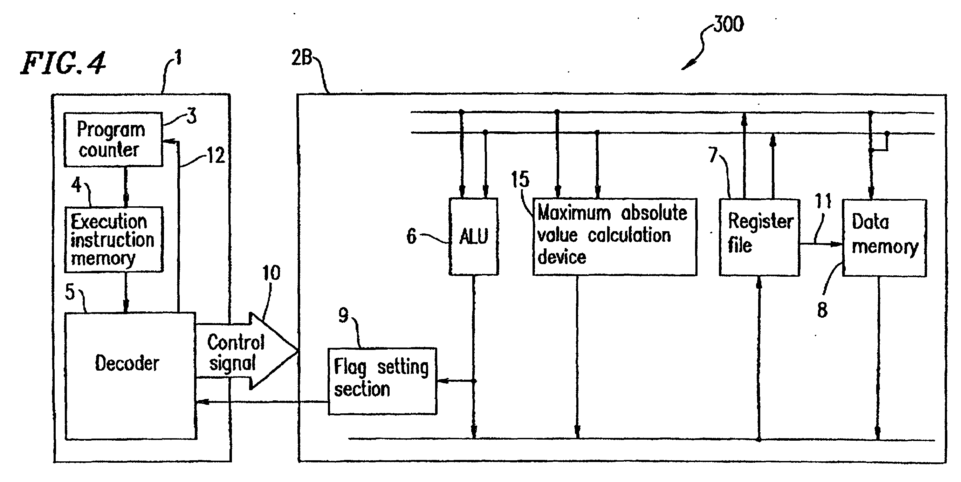

A third example according to the present invention will be described with reference to Figure 4. Figure **4** is a block diagram of a processor **300** in the third example. The processor **300** includes a data bus section **2B** for performing calculations and a control section **1** for controlling the data bus section **2B**. In the processor **300**, the comparison of the absolute values and the selection of one of the absolute values based on the comparison result are performed by hardware, unlike in the first and second examples.

The control section **1** includes a program counter **3**, an execution instruction memory **4**, and a decoder **5**. The program counter **3**, the execution instruction memory **4**, and the decoder **5** are identical with those in the processor **190** (Figure **19**) and detailed descriptions thereof will be omitted.

The data bus section **2B** includes an ALU **6**, a maximum absolute value calculation device **15**, a register file **7**, a data memory **8**, and the flag setting section **9**. The ALU **6**, the register file **7**, and the data memory **8**, are identical with those in the processor **190** (Figure **19**) and detailed descriptions thereof will be omitted. The flag setting section **9** is identical with those in the processor **190** (Figure **19**) and detailed descriptions thereof will be omitted.

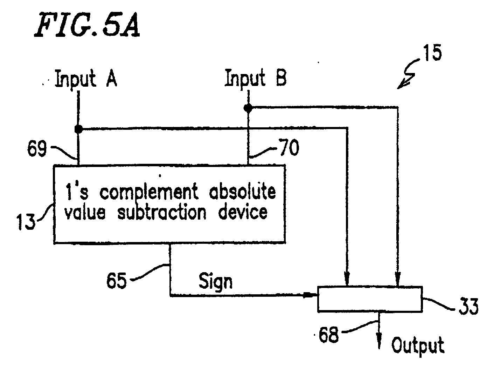

Figure **5A** shows a structure of the maximum absolute value calculation device **15**. The maximum absolute value calculation device **15** compares, using the 1's complement, the absolute values of two values respectively stored in two registers in the register file **7** designated by the control signal **10**. The comparison result is output as indication information indicating which one of the two values has the larger absolute value. Based on the indication information, the maximum absolute value calculation device **15** outputs the value having the larger absolute value. The output value is written in the register in the register file designated by the control signal **10**.

As shown in Figure **5A**, the maximum absolute value calculation device **15** includes a 1's complement absolute value subtraction device **13** (acting as a first 1's complement absolute value calculation device, a second 1's complement absolute value calculation device, and an indication information output device), and a selector **33** (as a selection device).

The 1's complement absolute value subtraction device **13** subtracts the value of the input **B** (**70**) or the absolute value of the 1's complement representation of the input **B** (**70**) from the value of the input **A** (**69**) or the absolute value of the 1's complement representation of the input **A** (**69**), and outputs the subtraction result as an absolute value comparison calculation result (indication information) **65**. The 1's complement absolute value subtraction device **13** has the same structure as that of the 1's complement absolute value subtraction device **13** in the first and second examples and the detailed description thereof will be omitted. The selector **33** selects the input **B** (**70**) when the absolute value calculation result **65** is negative and selects the input **A** (**69**) otherwise, and outputs the selected value as a maximum absolute value selection calculation result **68**.

In the processor **300** (Figure **4**), the bit widths of the 5 registers A, B, C, D and P, the bit width of the data memory **8**, the bit width of data input to and output from the ALU **6** are all 4 bits. The bit width of data input to and output from the maximum absolute value calculation device **15**, and the bit width relating to the calculation accuracy are all 4 bits.

The processor **300** has the same execution instructions as those of the conventional processor **190** (Figure **19**) as well as the following execution instructions performed by the maximum absolute value calculation device **15**: "abmax a,b: absolute values of the values respectively stored in registers a and b are compared with each other, and the value having the larger absolute value is set in register a".

Hereinafter, an operation of the processor **300** in the third example will be described.

### <Operation example 1>

How the data having the maximum absolute value among four pieces of practical data shown in Figure **18** is found will be described, mainly regarding the "abmax" instruction, using the maximum absolute value calculation device **15** (Figure **5A**).

Figure **5B** shows a program for finding the value having the maximum absolute value by the processor **300** including the maximum absolute value calculation device **15**. Steps (1) through (3) and (9) through (13) are identical with those in the case of the conventional processor **190** (Figure **19**). In step (15), the absolute values of the value of register C and the value of register A are compared with each other using the "abmax" instruction. The value having the larger absolute value is set in register C. The processing in step (15) is equivalent to the processing in steps (4) through (8) performed by the conventional processor **190**. The value of register C is input as the input **A** (**69**), and the value of register A is input as the input **B** (**70**).

In steps (1) and (2), the processing is identical with the case of the conventional processor **190**.

The processing is performed as follows in a first cycle.

In step (3), the processing is identical with the case of the conventional processor **190**.

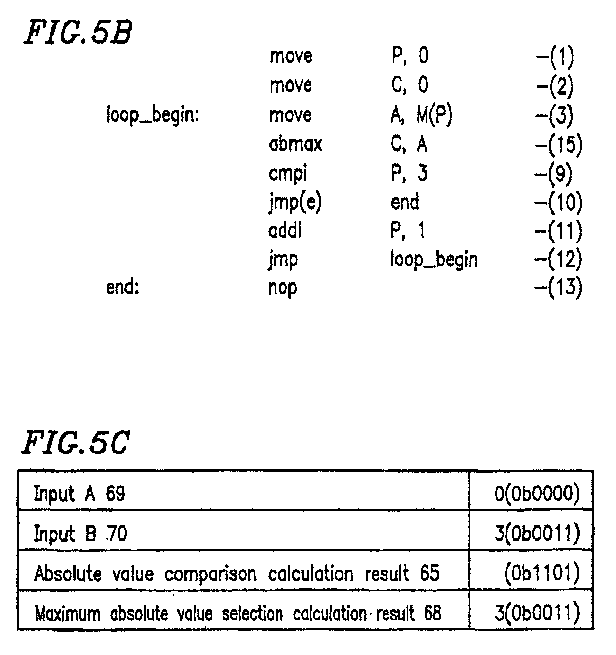

In step (15), a calculation using the maximum absolute value calculation device **15** is performed. This will be described with reference to Figure **5C**.

The value of register C, "0(0b0000)" is input as the input **A** (**69**), and the value of register A, "3(0b0011)" is input as the input **B** (**70**).

As in the first example described with reference to Figure **2C**, the absolute value comparison calculation result **65**, i.e., the output from the 1's complement absolute value subtraction device **13** is "(0b1101)". Since the sign of the absolute value comparison calculation result **65** is negative, the selector **33** selects the input **B** (**70**) and outputs "3(0b0011)" as the maximum absolute value selection calculation result **68**, and sets "3(0b0011)" in register C.

The processing in steps (9) through (12) is identical with the case of the conventional processor **190**.

The processing is performed as follows in a second cycle.

In step (3), the processing is identical with the case of the conventional processor **190**.

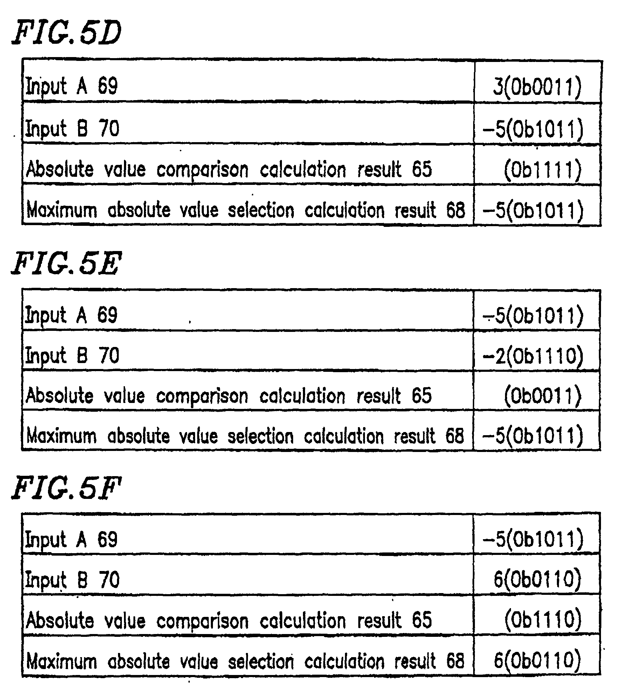

In step (15), a calculation using the maximum absolute value calculation device **15** is performed. This will be described with reference to Figure **5D**.

The value of register C, "3(0b0011)" is input as the input **A** (**69**), and the value of register A, "-5(0b1011)" is input as the input **B** (**70**).

As in the first example described with reference to Figure **2D**, the absolute value comparison calculation result **65**, i.e., the output from the 1's complement absolute value subtraction device **13**, is "(0b1111)". Since the sign of the absolute value comparison calculation result **65** is negative, the selector **33** selects the input **B** (**70**) and outputs "-5(0b1011)" as the maximum absolute value selection calculation result **68**, and sets "-5(0b1011)" in register C.

The processing in steps (9) through (12) is identical with the case of the conventional processor **190**.

The processing is performed as follows in a third cycle.

In step (3), the processing is identical with the case of the conventional processor **190**.

In step (15), a calculation using the maximum absolute value calculation device **15** is performed. This will be described with reference to Figure **5E**.

The value of register C, "-5(0b1011)" is input as the input **A** (**69**), and the value of register A, "-2(0b1110)" is input as the input **B** (**70**).

As in the first example described with reference to Figure **2E**, the absolute value comparison calculation result **65**, i.e., the output from the 1's complement absolute value subtraction device **13**, is "(0b0011)". Since the sign of the absolute value comparison calculation result **65** is not negative, the selector **33** selects the input **A** (**69**) and outputs "-5(0b1011)" as the maximum absolute value selection calculation result **68**, and sets "-5(0b1011)" in register C.

The processing in steps (9) through (12) is identical with the case of the conventional processor **190**.

The processing is performed as follows in a fourth cycle.

In step (3), the processing is identical with the case of the conventional processor **190**.

In step (15), a calculation using the maximum absolute value calculation device **15** is performed. This will be described with reference to Figure **5F**.

The value of register C, "-5(0b1011)" is input as the input **A** (**69**), and the value of register A, "6(0b0110)" is input as the input **B** (**70**).

As in the first example described with reference to Figure **2F**, the absolute value comparison calculation result **65**, i.e., the output from the 1's complement absolute value subtraction device **13**, is "(0b1110)". Since the sign of the absolute value comparison calculation result **65** is negative, the selector **33** selects the input **B** (**70**) and outputs "6(0b0110)" as the maximum absolute value selection calculation result **68**, and sets "6(0b0110)" in register C.

The processing in steps (9) through (12) is identical with the case of the conventional processor **190**.

By such processing, the maximum absolute value "6" can be found in register C.

### <Operation example 2>

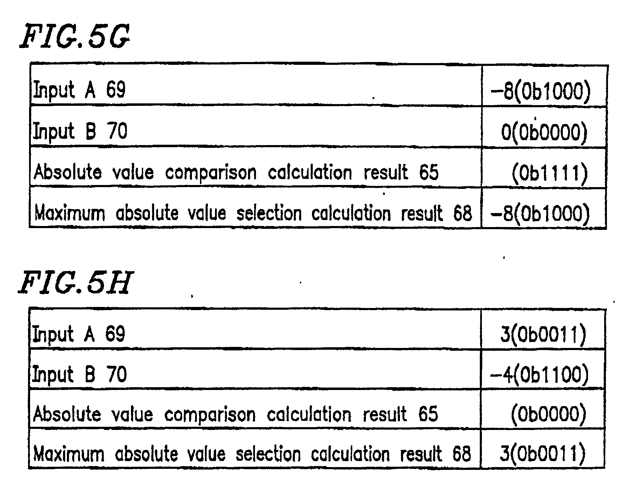

The processing in step (14) when "0(0b0000)" is set in register A and "-8(0b1000)" is set in register C with reference to Figure **5G**. As described above, "-8(0b1000)" is a negative value having the maximum absolute value in the range of numerical values which can be represented by 2's complements of a prescribed bit width. With the conventional processor **190**, the overflow occurs and accurate calculation is not possible. The "abmax C,A" instruction is used.

The value of register C, "-8(0b1000)" is input as the input **A** (**69**), and the value of register A, "0(0b0000)" is input as the input **B** (**70**).

As in the first example described with reference to Figure **2G**, the absolute value comparison calculation result **65**, i.e., the output from the 1's complement absolute value subtraction device **13**, is "(0b0111)". Since the sign of the absolute value comparison calculation result **65** is not negative, the selector **33** selects the input **A** (**69**) and outputs "-8(0b1000)" as the maximum absolute value selection calculation result **68**, and sets "-8(0b1000)" in register C.

In this manner, the processor **300** does not cause an overflow even when the negative value having the maximum absolute value is input, and correctly compares two numerical values.

### <Operation example 3>

The processing in step (14) when "-4(0b1100)" is set in register A and "3(0b0011)" is set in register C will be described with reference to Figure **5H**. The "abmax C,A" instruction is used.

The value of register C, "3(0b0011)" is input as the input **A** (**69**), and the value of register A, "-4(0b1100)" is input as the input **B** (**70**).

As in the first example described with reference to Figure **2H**, the absolute value comparison calculation result **65**, i.e., the output from the 1's complement absolute value subtraction device **13**, is "(0b0000)". Since the sign of the absolute value comparison calculation result **65** is not negative, the selector **33** selects the input **A** (**69**) and outputs "3(0b0011)" as the maximum absolute value selection calculation result **68**, and sets "3(0b0011)" in register C.

When the "abmax C,A" instruction is performed in step (15), and where the value of register A is a negative value (for example, -4) and the value of register C is a positive value having the absolute value smaller by 1 than the absolute value of the value of register A (for example, 3), the comparison calculation result is found as 0. Thus, the comparison of the absolute values is not correctly done. Accordingly, a value having an absolute value which is smaller by 1 than the absolute value which is to be found as the maximum absolute value is incorrectly found as the maximum absolute value. However, audio data is processed with the bit width of 16, and the range of numerical values which can be represented by 16 bits is -32768 to 32767. Even when the obtained absolute value is different from the correct absolute value by 1, the error is about 0.003% with respect to the full range of the 16 bit data and is negligible.

As described above, the processor **300** in the third example according to the present invention can find the maximum absolute value with a negligible error. Even when a negative value having the maximum absolute value among the numerical values which can be represented with 2's complements of a prescribed bit width is input, the calculations can be performed correctly. Moreover, since steps (14), (7) and (8) shown in Figure **21** are performed by hardware instead of software as in the first and second examples, the calculations can be performed at a higher speed than in the previous two examples.

### (Example 4)

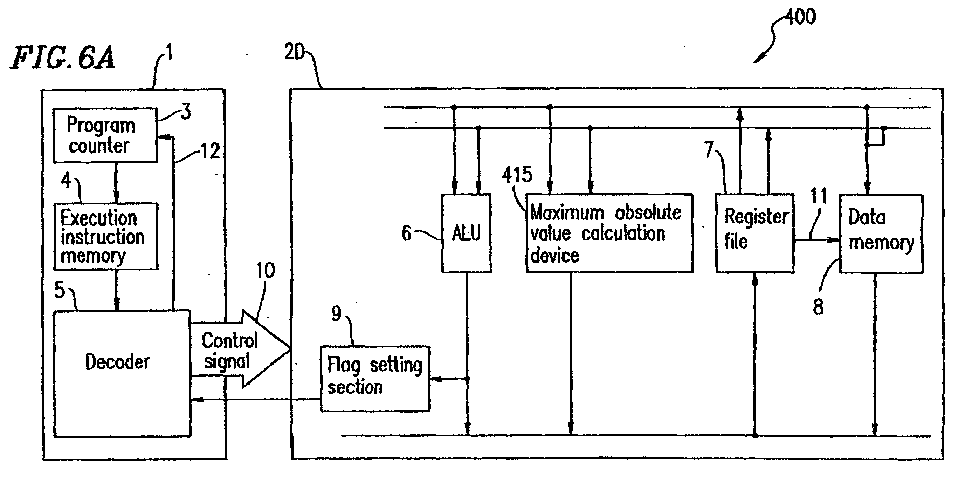

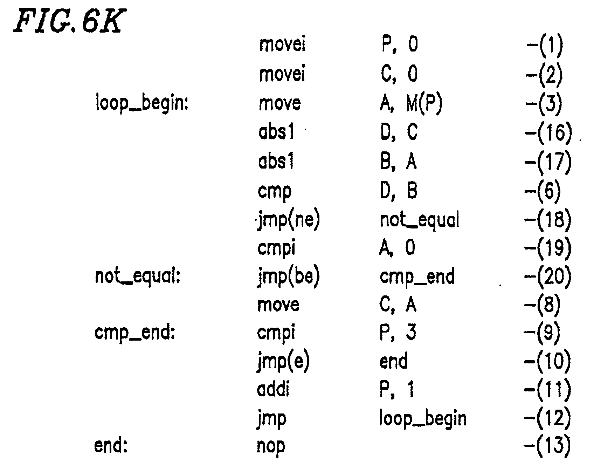

A fourth example according to the present invention will be described with reference to Figure **6A**. Figure **6A** is a block diagram of a processor **400** in the fourth example. The processor **400** includes a data bus section **2D** for performing calculations and a control section **1** for controlling the data bus section **2D**. The data bus section **2D** includes an absolute value calculation device **415** instead of the absolute value calculation device **15** (Figure **5A**) in the third example. Except for this, the processor **400** has the same structure as that of the processor **300** (Figure **4**).

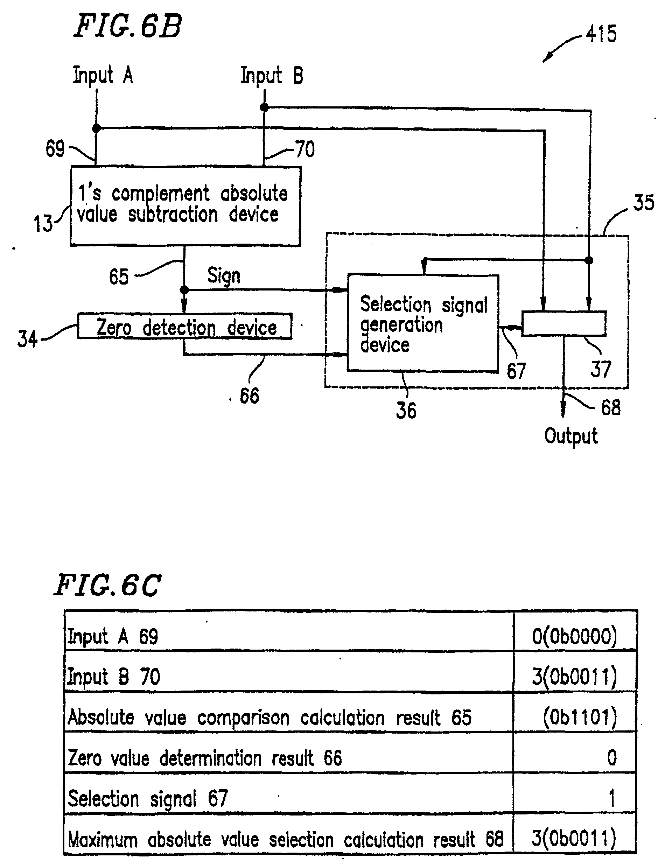

Figure **6B** shows a structure of the maximum absolute value calculation device **415**. The maximum absolute value calculation device **415** compares, using the 1's complement, the absolute values of two values respectively stored in two registers in the register file **7** designated by the control signal **10**. The comparison result is output as indication information indicating which one of the two values has the larger absolute value. Based on the indication information, the maximum absolute value calculation device **415** outputs the value having the larger absolute value. The output value is written in the register in the register file designated by the control signal **10**.

As shown in Figure **6B**, the maximum absolute value calculation device **415** includes a 1's complement absolute value subtraction device **13** (acting as a first 1's complement absolute value calculation device, a second 1's complement absolute value calculation device, and an indication information output device), a zero detection device **34**, and an output value selection device **35** (as an output value selection device).

The 1's complement absolute value subtraction device **13** subtracts the value of the input **B** (**70**) or the absolute value of the 1's complement representation of the input **B** (**70**) from the value of the input **A** (**69**) or the absolute value of the 1's complement representation of the input **A** (**69**), and outputs the subtraction result as an absolute value comparison calculation result (indication information) **65**. The 1's complement absolute value subtraction device **13** has the same structure as that of the 1's complement absolute value subtraction device **13** in the first and second examples, and the detailed description thereof will be omitted.

The zero detection device **34** (as a zero value determination device) outputs "1" as a zero value determination result **66** when the value of the absolute value comparison calculation result is zero (all the 4 bits are 0, i.e., "0b0000") and outputs "0" otherwise.

The output value selection device **35** includes a selection signal generation device **36** and a selector **37**. The selection signal generation device **36** outputs "1" as a selection signal **67** when the sign of the absolute value comparison calculation result **65** is negative, or when the zero value determination result **66** is "1" and the sign of the input **B** (**70**) is negative, and output "0" otherwise. The selector **37** selects the input **A** (**69**) when the selection signal **67** is "0" and selects the input **B** (**70**) when the selection signal **67** is "1", and outputs the selected input as the maximum absolute value selection calculation result **68**.

The processor **400** has the same execution instructions as those of the conventional processor **300** (Figure **4**). The "abmax" instruction is performed by the maximum absolute value calculation device **415** (Figure **6B**).

Hereinafter, an operation of the processor **400** in the fourth example will be described.

### <Operation example 1>

How the data having the maximum absolute value among four pieces of practical data shown in Figure **18** is found will be described, mainly regarding the "abmax" instruction, using the maximum absolute value calculation device **415** (Figure **6B**). The program used in the third example is also used in the fourth example.

In steps (1) and (2), the processing is identical with the case of the conventional processor **190**.

The processing is performed as follows in a first cycle.

In step (3), the processing is identical with the case of the conventional processor **190**.

In step (15), a calculation using the maximum absolute value calculation device **415** is performed. This will be described with reference to Figure **6C**.

The value of register C, "0(0b0000)" is input as the input **A** (**69**), and the value of register A, "3(0b0011)" is input as the input **B** (**70**).

As in the first example described with reference to Figure **2C**, the absolute value comparison calculation result **65**, i.e., the output from the 1's complement absolute value subtraction device **13**, is "(0b1101)". Since the absolute value comparison calculation result **65** is not "(0b0000)" (all 4 bits are zero), the zero value determination result **66** is "0". Since the sign of the absolute value comparison calculation result **65** is negative, the selection signal generation device **36** outputs "1" as the selection signal **67**. Since the selection signal **67** is "1", the selector **37** selects the input **B** (**70**), outputs "3(0b0011)" as the maximum absolute value selection calculation result **68**, and sets "3(0b0011)" in register C.

The processing in steps (9) through (12) is identical with the case of the conventional processor **190**.

The processing is performed as follows in a second cycle.

In step (3), the processing is identical with the case of the conventional processor **190**.

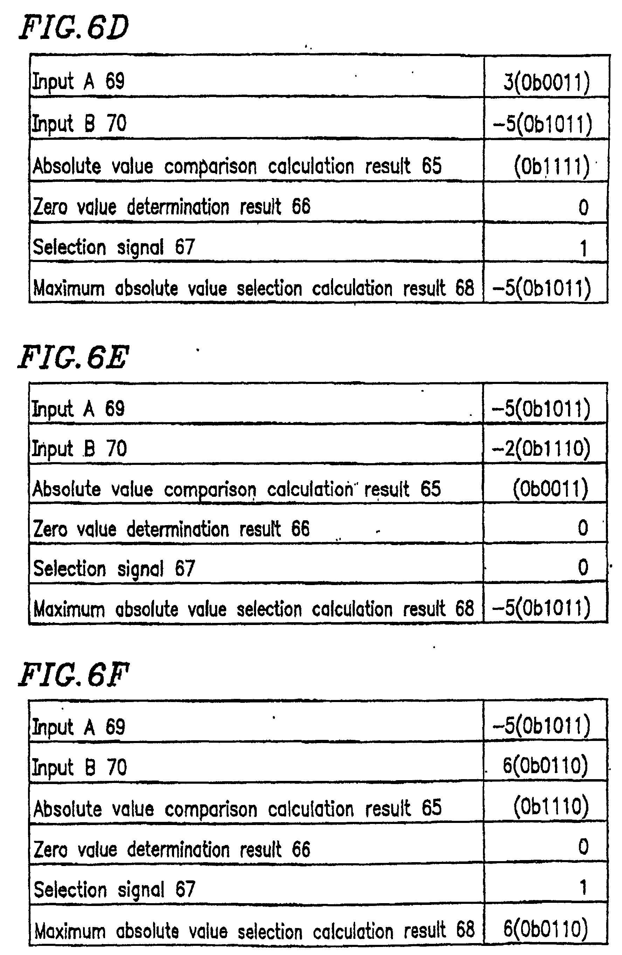

In step (15), a calculation using the maximum absolute value calculation device **415** is performed. This will be described with reference to Figure **6D**.

The value of register C, "3(0b0011)" is input as the input **A** (**69**), and the value of register A, "-5(0b1011)" is input as the input **B** (**70**).

As in the first example described with reference to Figure **2D**, the absolute value comparison calculation result **65**, i.e., the output from the 1's complement absolute value subtraction device **13**, is "(0b1111)". Since the absolute value comparison calculation result **65** is not "(0b0000)" (all 4 bits are zero), the zero value determination result **66** is "0". Since the sign of the absolute value comparison calculation result **65** is negative, the selection signal generation device **36** outputs "l" as the selection signal **67**. Since the selection signal **67** is "1", the selector **37** selects the input **B** (**70**), outputs "-5(0b1011)" as the maximum absolute value selection calculation result **68**, and sets. "-5(0b1011)" in register C.

The processing in steps (9) through (12) is identical with the case of the conventional processor **190**.

The processing is performed as follows in a third cycle.

In step (3), the processing is identical with the case of the conventional processor **190**.

In step (15), a calculation using the maximum absolute value calculation device **415** is performed. This will be described with reference to Figure **6E**.

The value of register C, "-5(0b1011)" is input as the input **A** (**69**), and the value of register A, "-2(0b1110)" is input as the input **B** (**70**).

As in the first example described with reference to Figure **2E**, the absolute value comparison calculation result **65**, i.e., the output from the 1's complement absolute value subtraction device **13**, is "(0b0011)". Since the absolute value comparison calculation result **65** is not "(0b0000)" (all 4 bits are zero), the zero value determination result **66** is "0". Since the sign of the absolute value comparison calculation result **65** is not negative and the zero value determination result **66** is "0", the selection signal generation device **36** outputs "0" as the selection signal **67**. Since the selection signal **67** is "0", the selector **37** selects the input **A** (**69**), outputs "-5(0b1011)" as the maximum absolute value selection calculation result **68**, and sets "-5(0b1011)" in register C.

The processing in steps (9) through (12) is identical with the case of the conventional processor **190**.

The processing is performed as follows in a fourth cycle.

In step (3), the processing is identical with the case of the conventional processor **190**.

In step (15), a calculation using the maximum absolute value calculation device **415** is performed. This will be described with reference to Figure **6F**.

The value of register C, "-5(0b1011)" is input as the input **A** (**69**), and the value of register A, "6(0b0110)" is input as the input **B** (**70**).

As in the first example described with reference to Figure **2F**, the absolute value comparison calculation result **65**, i.e., the output from the 1's complement absolute value subtraction device **13**, is "(0b1110)". Since the absolute value comparison calculation result **65** is not "(0b0000)" (all 4 bits are zero), the zero value determination result **66** is "0". Since the sign of the absolute value comparison calculation result **65** is negative, the selection signal generation device **36** outputs "l" as the selection signal **67**. Since the selection signal **67** is "1", the selector **37** selects the input **B** (**70**), outputs "6(0b0110)" as the maximum absolute value selection calculation result **68**, and sets "6(0b0110)" in register C.

The processing in steps (9) through (12) is identical with the case of the conventional processor **190**.

By such processing, the maximum absolute value "6" can be found in register C.

### <Operation example 2>

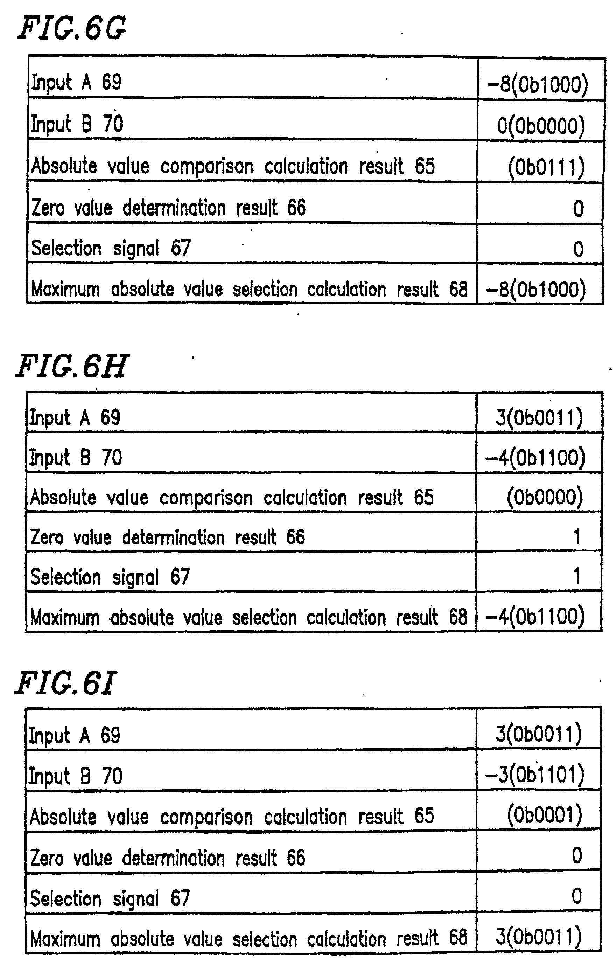

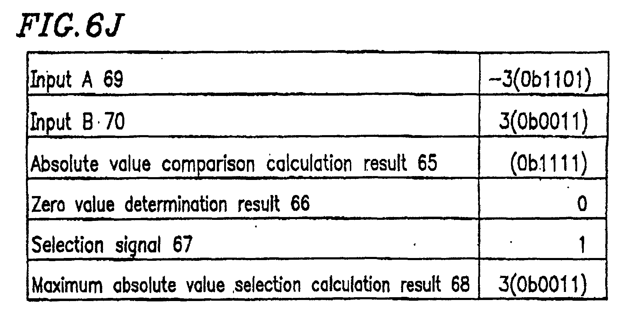

The processing in step (15) when "0(0b0000)" is set in register A and "-8(0b1000)" is set in register C with reference to Figure **6G**. As described above, "-8(0b1000)" is a negative value having the maximum absolute value in the range of numerical values which can be represented by 2's complements of a prescribed bit width. With the conventional processor **190**, the overflow occurs and accurate calculation is not possible. The "abmax C,A" instruction is used.

The value of register C, "-8(0b1000)" is input as the input **A** (**69**), and the value of register A, "0(0b0000)" is input as the input **B** (**70**).

As in the first example described with reference to Figure **2G**, the absolute value comparison calculation result **65**, i.e., the output from the 1's complement absolute value subtraction device **13**, is "(0b0111)". Since the absolute value comparison calculation result **65** is not "(0b0000)" (all 4 bits are zero), the zero value determination result **66** is "0", Since the sign of the absolute value comparison calculation result **65** is not negative and the zero value determination result **66** is "0", the selection signal generation device **36** outputs "0" as the selection signal **67**. Since the selection signal **67** is "0", the selector **37** selects the input **A** (**69**), outputs "-8(0b1000)" as the maximum absolute value selection calculation result **68**, and sets "-8(0b1000)" in register C.

In this manner, the processor **400** does not cause an overflow even when the negative value having the maximum absolute value is input, and correctly compares two numerical values.

### <Operation example 3>

The processing in step (15) when "-4(0b1100)" is set in register A and "3(0b0011)" is set in register C will be described with reference to Figure **6H**. The "abmax C,A" instruction is used. In the processors **100**, **200** and **300** described above cannot compare the absolute values correctly with these inputs.

The value of register C, "3(0b0011)" is input as the input **A** (**69**), and the value of register A, "-4(0b1100)" is input as the input **B** (**70**).

As in the first example described with reference to Figure **2H**, the absolute value comparison calculation result **65**, i.e., the output from the 1's complement absolute value subtraction device **13**, is "(0b0000)". Since the absolute value comparison calculation result **65** is "(0b0000)" (all 4 bits are zero), the zero value determination result **66** is "1". Since the sign of the absolute value comparison calculation result **65** is not negative but the zero value determination result **66** is "l" and the sign of the input **B** (**70**) is negative, the selection signal generation device **36** outputs "1" as the selection signal **67**. Since the selection signal **67** is "l", the selector **37** selects the input **B** (**70**), outputs "-4(0b1100)" as the maximum absolute value selection calculation result **68**, and sets "-4(0b1100)" in register C.

In this manner, the processor **400** can correctly compare the absolute values even when the value of register A is a negative value (for example, -4) and the value of register C is a positive value having the absolute value smaller by 1 than the absolute value of the value of register A (for example, 3).

### <Operation example 4>

In this operation example, two input values having an equal absolute value and opposite signs are compared with each other.

The processing in step (15) when "-3(0b1101)" is set in register A and "3(0b0011)" is set in register C will be described with reference to Figure **6I**. The "abmax C,A" instruction is used.

The value of register C, "3(0b0011)" is input as the input **A** (**69**), and the value of register A, "-3(0b1101)" is input as the input **B** (**70**).

The absolute value comparison calculation result **65**, which is obtained by subtracting "(0b0010)" (absolute value of the 1's complement representation of the input **B (70**)) from "(0b0011)" (input **A** (**69**)), is "(0b0001)". Since the absolute value comparison calculation result **65** is not "(0b0000)" (all 4 bits are zero), the zero value determination result **66** is "0". Since the sign of the absolute value comparison calculation result **65** is not negative and the zero value determination result **66** is "0", the selection signal generation device **36** outputs "0" as the selection signal **67**. Since the selection signal **67** is "0", the selector **37** selects the input **A** (**69**), outputs "3(0b0011)" as the maximum absolute value selection calculation result **68**, and sets "3(0b0011)" in register C.

With reference to Figure **6J**, the processing in step (15) when "3(0b1101)" is set in register A and "-3(0b0011)" is set in register C will be described. The "abmax C,A" instruction is used.

The value of register C, "-3(0b1101)" is input as the input **A** (**69**), and the value of register A, "3(0b1101)" is input as the input **B** (**70**).

The absolute value comparison calculation result **65**, which is obtained by subtracting "(0b0011)" (input **B** (**70**)) from "(0b0010)" (absolute value of the 1's complement representation of the input **A** (**69**)), is "(0b1111)". Since the absolute value comparison calculation result **65** is not "(0b0000)" (all 4 bits are zero), the zero value determination result **66** is "0". Since the sign of the absolute value comparison calculation result **65** is negative, the selection signal generation device **36** outputs "1" as the selection signal **67**. Since the selection signal **67** is "1", the selector **37** selects the input **B** (**70**), outputs "3(0b0011)" as the maximum absolute value selection calculation result **68**, and sets "3(0b0011)" in register C.

As can be appreciated from operation example 4, the processor **400** consistently outputs the positive value when two values two having an equal absolute value and opposite signs are input.

As described above, the processor **400** in the fourth example according to the present invention can find the maximum absolute value with no error. Even when a negative value having the maximum absolute value among the numerical values which can be represented with 2's complements of a prescribed bit width is input, the calculations can be performed correctly. Moreover, since steps (14), (7) and (8) shown in Figure **21** are performed by hardware instead of software as in the first and second examples, the calculations can be performed at a higher speed than in the previous two examples.

When two values two having an equal absolute value and opposite signs are input, the processor **400** consistently outputs the positive value. Accordingly, when calculation is performed to find the value having the maximum absolute value among data group using the processor **400** including the absolute value calculation device **415** and as a result, a negative value (for example, -4) is found, it is guaranteed that the data group does not include a positive value having an absolute value equal to that of the obtained value (for example, 4). This is advantageous in the following case.

It is assumed that "-4(0b1100)" is found as the value having the maximum absolute value among data group using the processor **400**. It is guaranteed that the data group does not include "4(0b0100)". Accordingly, it is understood that in order to represent each piece of data included in the range from which the value having the maximum absolute value has been obtained with a smallest possible bit width with no waste, a 3 bit width is sufficient which can represent 8 values of -4 to 3. If it was not guaranteed that the data group does not include "4(0b0100)", a 4 bit width would be necessary in order to represent 9 values of -4 to 4. In this manner, the processor **400** can find the bit width for representing each piece of data in the data group with no waste, at a higher speed than in the conventional processor **190** (Figure **19)**.

Figure **6K** shows a program for finding the value having the maximum absolute value using the processor **400**, but without using the absolute value calculation device **415**. The "abmax" instruction is illustrated in detail by a plurality of steps. In the program shown in Figure **6K**, "abs1 a,b" is an instruction for obtaining the absolute value of the 1's complement representation procedure of the value in register b and setting the absolute value in register a; "jmp(be) label" is an instruction for jumping to label when the N flag register=0; and jmp(ne) label" is an instruction for jumping to label when the Z flag register=0. In step (20), the "jmp(be)" instruction uses the calculation result in step (19) for condition determination when the calculation result in step (6) is "0", and uses the calculation result in step (6) for condition determination when the calculation result in step (6) is not "0". Steps (16), (17) and (6) correspond to the "abmax" instruction.

In the first and second examples, the first 1's complement absolute value calculation device **20** (Figures **2A** and **3B**) and the second 1's complement absolute value calculation device **21** (Figure **2A**) are provided as a device for performing 1's complement absolute value calculations, but any other device which can perform the same function is usable.

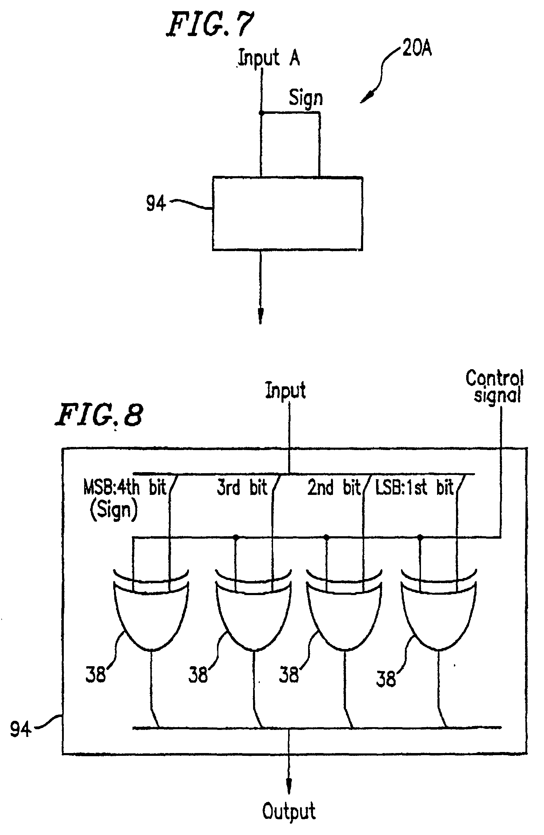

Figure **7** shows another 1's complement absolute value calculation device **20A** which can be used in the processor according to the present invention. The 1's complement absolute value calculation device **20A** includes an exclusive OR calculation device **94** for performing an exclusive OR calculation of a sign bit of input data and each bit of the input data. The sign bit of the input data is input as a control signal for the exclusive OR calculation device **94**. Figure **8** shows an exemplary structure of the exclusive OR calculation device **94**. The input to the exclusive OR calculation device **94** is 4 bit data. As shown in Figure **8**, the exclusive OR calculation device **94** includes a plurality of exclusive OR calculation elements **38** for performing exclusive OR calculation of a sign bit of the input data and the control signal.

Hereinafter, an exemplary operation of the 1's complement absolute value calculation device **20A** (Figure **7**) will be described. It is assumed, for example, that "3(0b0011)" is input. An exclusive OR calculation is performed on the value of the sign bit, "0b0", and each bit of the input data, i.e., "3(0b0011)". As a result, "(0b0011)" is output. In this case, the bits of the input data are not inverted after the exclusive OR calculation. When "-5(0b1011)" is input, an exclusive OR calculation is performed on the value of the sign bit, "0b1", and each bit of the input data, i.e., "-5(0b1011)". As a result, "(0b0100)" is output. In this case, the bits of the input data are inverted after the exclusive OR calculation. As can be appreciated, the structure shown in Figure **7** can act as a 1's complement absolute value calculation device.

In the second example, 1's complement absolute value inversion calculation device **27** (Figure **3B**) is provided as a device for performing 1's complement absolute value inversion calculations, but any other device which can perform the same function is usable.

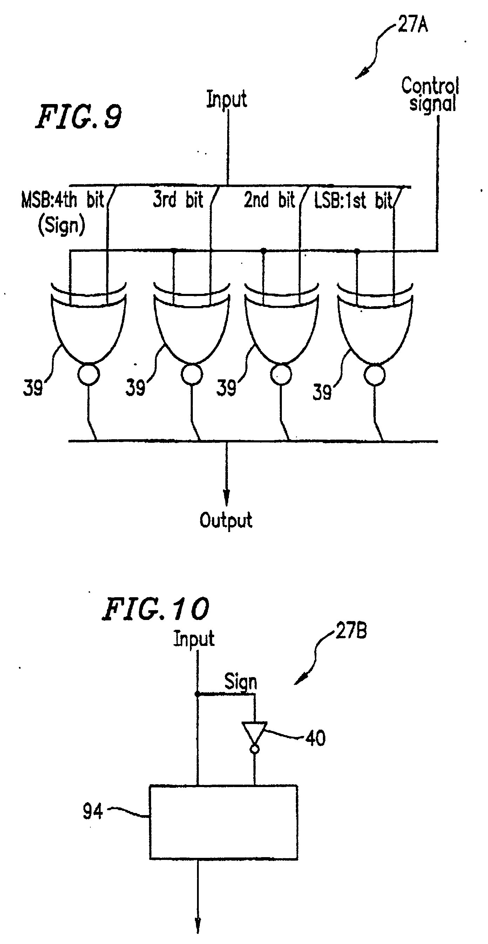

Figure **9** shows another 1's complement absolute value inversion calculation device **27A** which can be used in the processor according to the present invention. The l's complement absolute value inversion calculation device **27A** includes a plurality of exclusive OR and inversion calculation elements **39** for performing an exclusive OR calculation of a sign bit of input data and each bit of the input data, then inverting the result, and output the inverted result.

It is assumed, for example, that "3(0b0011)" is input. An exclusive OR calculation is performed on the value of the sign bit, "0b0", and each bit of the input data, i.e., "3(0b0011)". After the exclusive OR and inversion calculation of the result, "(0b0011)" is output. When "-5(0b1011)" is input, an exclusive OR calculation is performed on the value of the sign bit, "0b1", and each bit of the input data, i.e., "-5(0b1011)". After the exclusive OR and inversion calculation of the result, "(0b1011)" is output. As can be appreciated, the structure shown in Figure **9** can act as a 1's complement absolute value inversion calculation device.

Figure **10** shows still another 1's complement absolute value inversion calculation device **27B** which can be used in the processor according to the present invention. The 1's complement absolute value inversion calculation device **27B** includes an inverter **40** for inverting the sign bit of input data, and an exclusive OR calculation device **94** for performing an exclusive OR calculation of the inverted sign bit of the input data and each bit of the input data. The exclusive OR calculation device **94** has the same structure as that of the exclusive OR calculation device **94** shown in Figure **8** and the detailed description thereof will be omitted.

Hereinafter, an exemplary operation of the l's complement absolute value inversion calculation device **27B** (Figure **10**) will be described. It is assumed, for example, that "3(0b0011)" is input. An exclusive OR calculation is performed on "0b1" (the inverted value of the sign bit, "0b0") and each bit of the input data, i.e., "3(0b0011)". As a result, "(0b1100)" is output. When "-5(0b1011)" is input, an exclusive OR calculation is performed on "0b0" (the inverted value of the sign bit, "0b1") and each bit of the input data, i.e., "-5(0b1011)". As a result, "(0b1011)" is output. As As can be appreciated, the structure shown in Figure **10** can act as a 1's complement absolute value inversion calculation device.

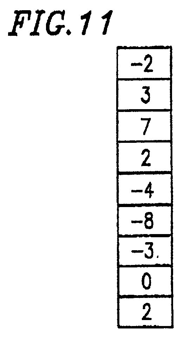

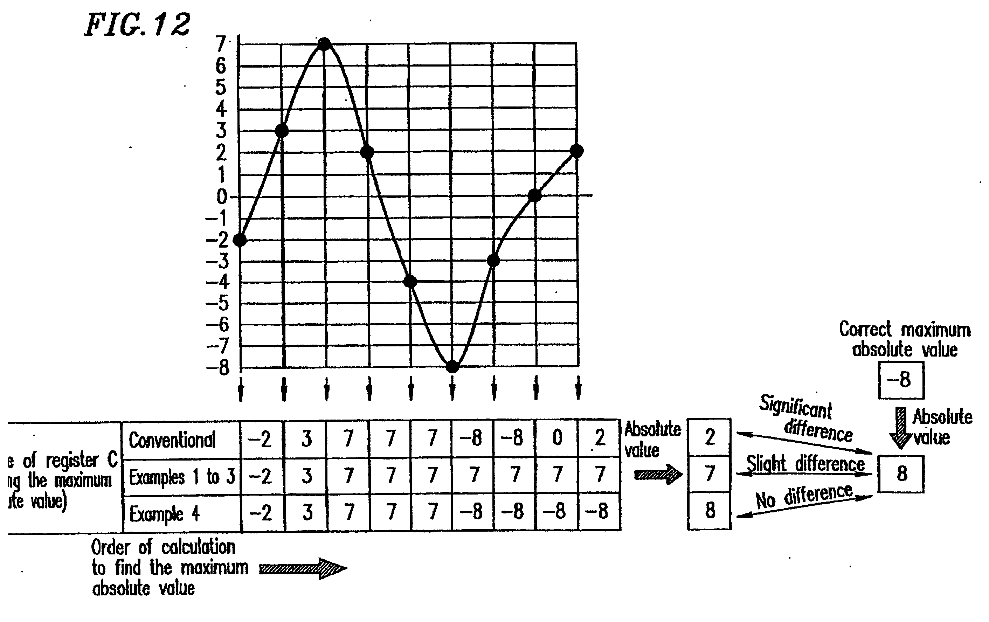

Figure **12** shows the change of the data selected by the processor until the data having the maximum absolute value is determined, and the obtained data having the maximum absolute value. The data having the maximum absolute value is obtained from among the data shown in Figure **11** using the processors **100** (Example 1), **200** (Example 2), **300** (Example 3)and **400** (Example 4) according to the present invention and the conventional processor **190** (prior art).

As shown in Figure **12**, the conventional processor **190** obtains "2" as opposed to "-8" which should be obtained as the value having the maximum absolute value. The difference in the absolute value between the obtained value and the correct value to be obtained is significantly large. This occurs because a correct calculation cannot be performed regarding "-8", which is the value having the maximum absolute value in the range of numerical values which can be represented by 2's complements of the 4 bit width. The processors **100**, **200** and **300** obtains "7", which is significantly closer in the absolute value to the correct value to be obtained than in the case of the conventional processor **190**. The processor **400** correctly obtains "-8". As can be appreciated from this, the processors according to the present invention obtain the value having the maximum absolute value with a significantly improved accuracy as compared to the conventional processor.

### (Example 5)

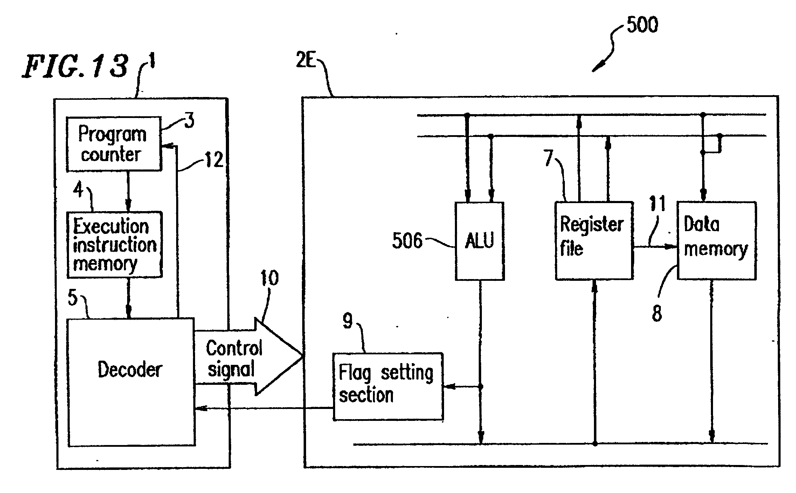

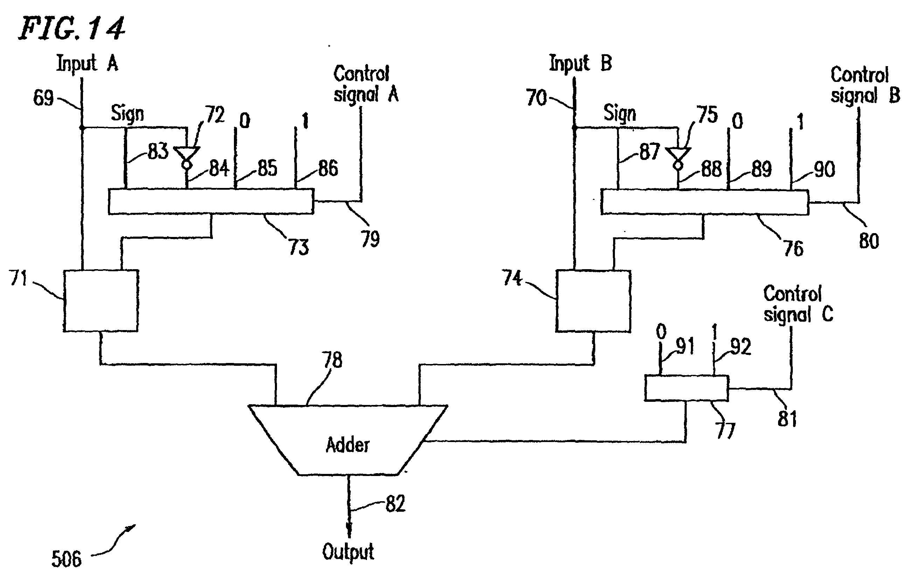

With reference to Figure **13**, a processor **500** in a fifth example according to the present invention will be described. The processor **500** includes a data bus section **2E** and a control section 1 for controlling the data bus section **2E**. The data bus section **2E** includes an ALU **506** shown in Figure **14**. Except for this, the processor **500** has substantially the same structure as that of the conventional general processor **160** (Figure **16**). The ALU **506** is modified from the ALU **6** included in the conventional general processor **160** so as to have the function of l's complement absolute value subtraction.

As shown in Figure **14**, the ALU **506** includes an exclusive OR calculation device **71**, an inverter **72**, a selector **73**, an exclusive OR calculation device **74**, an inverter **75**, a selector **76**, an adder **78** and a selector **77**. In addition to performing the usual addition and subtraction, the ALU **506** compares, using the 1's complement, the absolute values of two values respectively stored in two registers in the register file **7** designated by the control signal **10**. The comparison result is output as indication information indicating which one of the two values has the larger absolute value.

The exclusive OR calculation device **71** has the same structure as the exclusive OR calculation device **94** (Figure **8**, including a plurality of exclusive OR calculation elements **38**). The exclusive OR calculation device **71** performs an exclusive OR calculation of the input **A** (**69**) received as an input and a 1-bit control signal received from the selector **73**. The inverter **72** inverts the input **A** (**69**) and outputs the inverted value as an inverted sign signal **84**. Based on a control signal **A** (**79**), the selector **73** selects one of a sign signal **83** of the input **A** (**69**), the inverted sign signal **84**, a fixed value 0 signal **85**, and a fixed value 1 signal **86**, and the selected 1-bit signal. Accordingly, when the exclusive OR calculation device **71** receives the sign signal **83** of the input **A** (**69**), the exclusive OR calculation device **71** outputs the absolute value of the input **A** (**69**). More specifically, when the sign bit is "1", i.e., negative, an exclusive OR calculation of the input **A** (**69**) and "1111" is performed. Thus, each bit of the input **A** (**69**) is inverted, and the absolute value of the 1's complement representation is output from the exclusive OR calculation device **71**. When the sign bit is "0", i.e., positive, an exclusive OR calculation of the input **A** (**69**) and "0000" is performed. Thus, the input **A** (**69**) is output as it is from the exclusive OR calculation device **71**. When the exclusive OR calculation device **71** receives the inverted sign signal **84** as the control signal from the selector **73**, the absolute value of the 1's complement representation of the input **A** (**69**) is output.

The exclusive OR calculation device **74** has the same structure as the exclusive OR calculation device **94** (Figure **8**, including a plurality of exclusive OR calculation elements **38**). The exclusive OR calculation device **74** performs an exclusive OR calculation of the input **B** (**70**) received as an input and a 1-bit control signal received from the selector **76**. The inverter **75** inverts the input **B** (**70**) and outputs the inverted value as an inverted sign signal **88**. Based on a control signal **B** (**80**), the selector **76** selects one of a sign signal **87** of the input **B** (**70**), the inverted sign signal **88**, a fixed value 0 signal **89**, and a fixed value 1 signal **90**, and the selected 1-bit signal.

Based on a control signal **C** (**81**), the selector **77** selects either one of a fixed value 0 signal **91** or a fixed value 1 signal **92** and outputs the selected 1-bit signal.

The adder **78** adds the output from the exclusive OR calculation device **71**, the output from the exclusive OR calculation device **74** and the output from the selector **77**, and outputs the result as an output **82**.

The control signals **A** (**79**), **B** (**80**) and **C** (**81**) are sent together from the decoder **5** (Figure **13**) as the control signal **10**.

Hereinafter, an operation of the ALU **506** in the processor **500** will be described.

### <Operation example 1>

In this example, the sign signal **83** is output from the selector **73** based on the control signal **A** (**79**), the inverted sign signal **88** is output from the selector **76** based on the control signal **B** (**80**), and the fixed value 1 signal **92** is output from the selector **77** based on the control signal **C** (**81**). In this case, the ALU **506** subtracts the input **B** (**70**) from the input **A** (**69**).

When the sign signal **83** is input to the exclusive OR calculation device 71 from the selector **73** based on the control signal **A** (**79**), the exclusive OR calculation device **71** performs an exclusive OR calculation of each bit of the input A (**69**) and the sign bit of the input **A** (**69**).

When the inverted sign signal **88** is input to the exclusive OR calculation device **74** from the selector **76** based on the control signal **B** (**80**), the exclusive OR calculation device **74** performs an exclusive OR calculation of each bit of the input **B** (**70**) and the sign bit of the input **B** (**70**), and inverts the result.

The adder **78** adds the absolute value of the 1's complement representation of the input **A** (**69**), the inverted value of the absolute value of the 1's complement representation of the input **B** (**70**), and the output "1" from the selector **77**. In this case, the ALU **506** subtracts the inverted value of the absolute value of the 1's complement representation of the input **B** (**70**) from the absolute value of the l's complement representation of the input **A** (**69**) and outputs the result as the output **82**.

### <Operation example 2>

In this example, the fixed value 0 signal **85** is output from the selector **73** based on the control signal **A** (**79**), the fixed value 0 signal **89** is output from the selector **76** based on the control signal **B** (**80**), and the fixed value 0 signal **91** is output from the selector **77** based on the control signal **C** (**81**). In this case, the ALU **506** adds the input **A** (**69**) and the input **B** (**70**).

When the fixed value 0 signal **85** is input to the exclusive OR calculation device **71** from the selector **73** based on the control signal **A** (**79**), the exclusive OR calculation device **71** performs an exclusive OR calculation of each bit of the input **A** (**69**) and "0". As a result, the exclusive OR calculation device **71** outputs the input **A** (**69**) as it is.

When the fixed value 0 signal **89** is input to the exclusive OR calculation device **74** from the selector **76** based on the control signal **B** (**80**), the exclusive OR calculation device **74** performs an exclusive OR calculation of each bit of the input **B** (**70**) and "0". As a result, the exclusive OR calculation device **74** outputs the input **B** (**70**) as it is.

The adder **78** adds the value of the input **A** (**69**) from the exclusive OR calculation device **71**, the value of the input **B** (**70**) from the exclusive OR calculation device **74**, and the output "0" from the selector **77**. In this case, the ALU **506** adds the input **A** (**69**) and the input **B** (**70**).

### <Operation example 3>

In this example, the fixed value 0 signal **85** is output from the selector **73** based on the control signal **A** (**79**), the fixed value 1 signal **90** is output from the selector **76** based on the control signal B (**80**), and the fixed value 1 signal **92** is output from the selector **77** based on the control signal **C** (**81**).

When the fixed value 0 signal **85** is input to the exclusive OR calculation device **71** from the selector **73** based on the control signal **A** (**79**), the exclusive OR calculation device **71** performs an exclusive OR calculation of each bit of the input **A** (**69**) and "0". As a result, the exclusive OR calculation device **71** outputs the input **A** (**69**) as it is.

When the fixed value 1 signal **90** is input to the exclusive OR calculation device **74** from the selector **76** based on the control signal **B** (**80**), the exclusive OR calculation device **74** performs an exclusive OR calculation of each bit of the input **B** (**70**) and "1". As a result, the exclusive OR calculation device **74** outputs the inverted input **B** (**70**).

The adder **78** adds the value of the input **A** (**69**) from the exclusive OR calculation device **71**, the inverted input **B** (**70**) from the exclusive OR calculation device **74**, and the output "1" from the selector **77**. In this case, the ALU **506** subtracts the input **B** (**70**) from the input **A** (**69**).

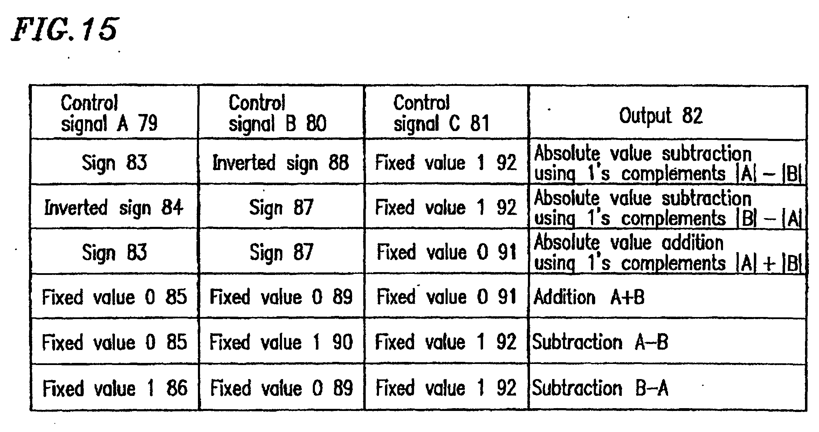

As described above, the ALU **506** of the processor **500** in the fifth example can perform a plurality of different types of calculations using the input **A** (**69**) and the input **B** (**70**) by combining different outputs by the control signals **A** (**79**), **B** (**80**) and **C** (**81**). Figure **15** shows different outputs by the control signals **A** (**79**), **B** (**80**) and **C** (**81**) as well as the resultant calculation results including the results described above in the operation examples 1 through 3.

The processor **500** performs addition and subtraction of the absolute values of 1's complements as well as usual, addition and subtraction using the calculation device according to the present invention.

The processor **500** can have different structures for performing usual addition and subtraction in addition to addition and subtraction of the absolute values of l's complements.

In the first through fourth examples, the 4 bit width is used, but other bit widths are usable.

In the third and fourth examples, by exchanging the selection conditions used by the selectors **33** and **37**, the value having the minimum absolute value can be found, instead of the value having the maximum absolute value.

The calculation method according to the present invention can be represented by a computer program and recorded on a computer-readable recording medium. The computer program can be executed in the state of being read by the computer.

Alternatively, the calculation method according to the present invention can be represented by a microcode of a processor and performed as the execution instruction of the processor.

The processors in the first through fifth examples use absolute values of the 1's complement representations. Accordingly, even when a negative value having the maximum absolute value in the range of numerical values which can be represented with a prescribed bit is input, the comparison calculation can be correctly performed.

The processor in the fourth example, when two values having an equal absolute value and opposite signs are input, consistently outputs the positive value as the value having the larger absolute value. Accordingly, when a negative value A is found with this processor, it is guaranteed that the data group checked does not include a positive value having an equal absolute value to the negative value A. Therefore, the smallest possible bit width required to represent each piece of data in the data group can be set with no waste.

The processor in the fourth example, in the case where a positive value is subtracted from a negative value and the positive value has an absolute value smaller by 1 than the absolute value of the negative value, correctly outputs the positive value as the value having a larger absolute value. Accordingly, the comparison calculation can be performed with no error using the 1's complement representation procedure.

The method according to the first through fifth examples facilitates the calculation performed by a processor according to the present invention and is applicable to a computer program or the like.

As described above, the present invention provides a calculation device for accurately processing a negative value having the maximum absolute value in the range of numerical values which can be represented with a prescribed bit width and for determining the minimum possible bit width for representing the given data, a calculation method for performing such processing using the calculation device, and a processor including such a calculation device.

## Claims

1. A calculation device for receiving a 2's complement representation of a first value and a 2's complement representation of a second value and outputting information which indicates which of an absolute value of the first value or an absolute value of the second value is larger, the calculation device comprising:
a first 1's complement absolute value calculation device (20) for converting the first value into a 1's complement representation and outputting the resultant 1's complement representation when a sign of the first value is negative, and outputting the first value as it is when the sign of the first value is not negative;
a second 1's complement absolute value calculation device (21) for converting the second value into a 1's complement representation and outputting the resultant 1's complement representation when a sign of the second value is negative, and outputting the second value as it is when the sign of the second value is not negative; and
an indication information output device (22) for outputting indication information which indicates which of the absolute value of the first value or the absolute value of the second value is larger based on the output of the first 1's complement absolute value calculation device (20) and the output of the second 1's complement absolute value calculation device (21),
further comprising a selection device (33) for outputting either the first value or the second value which has the larger absolute value.

2. A calculate device according to claim 1, wherein, when the absolute value of the first value and the absolute value of the second value are equal to each other and the sign of the first value and the sign of the second value are different from each other, the selection device (33) selects and outputs either the first value or the second value which has a positive sign.

3. A calculation device according to claim 1, wherein the indication information output device (22) subtracts the output of the second 1's complement absolute value calculation device (21) from the output of the first 1's complement absolute value calculation device (20), and outputs the subtraction result.

4. A calculation device according to claim 1, wherein:
the second 1's complement absolute value calculation device (27) includes an inversion device (29) for inverting each of bits of the 1's complement representation of the second value when the sign of the second value is negative, and inverting each of bits of the second value when the sign of the second value is positive,
the indication information output device (28) obtains a sum of the output of the first 1's complement absolute value calculation device (20) and the output of the second 1's complement absolute value calculation device (27), adding 1 to the sum. and outputting the addition result.

5. A calculation device according to claim 1, further comprising a zero value determination device (34) for determing whether the output of the indication information output device (13) is 0 or not wherein the selection device (35) selects and outputs the second value when the output of the indication information output device (13) is negative or when the output of the indication Information output device (13) is 0 and the sign of the second value is negative, and selects and outputs the first value otherwise.

6. A calculation method for finding which of an absolute value of a 2's complement representation of a first value or an absolute value of a 2's complement representation of a second value is larger, the calculation method comprising:
a first 1's complement absolute calculation step of converting the first value into a 1's complement representation when a sign of the first value is negative and maintaining the first value as it is when the sign of the first value is not negative;
a second 1's complement absolute value calculation step of converting the second value into a 1's complement representation when a sign of the second value is negative and maintaining the second value as it is when the sign of the second value is not negative; and
an indication information step of finding indication information which indicates which of the absolute value of the first value or the absolute value of the second value is larger based on the value obtained by the first 1's complement absolute value calculation step and the value obtained by the second 1 's complement absolute value calculation step,
further comprising a selection step of selecting either the first value or the second value which has the larger absolute value.

7. A calculation method according to claim 6, wherein the selection step includes the step of, when the absolute value of the first value and the absolute value of the second value are equal to each other and the sign of the first value and the sign of the second value are different from each other, selecting either the first value or the second value which has a positive sign as a value having a larger absolute value.

8. A calculation method according to claim 6, wherein the indication information step includes the step of subtracting the output of the second 1's complement absolute value calculation device from the output of the first 1's complement absolute value calculation device and outputting the subtraction result.

9. A calculation method according to claim 6, wherein:
the second 1's complement absolute value calculation step includes the step of inverting each of bits of the 1's complement representation of the second value when the sign of the second value is negative, and inverting each of bits of the second value when the sign of the second value is not negative,
the indication information output step includes the step of obtaining a sum of the output obtained by the first 1's complement absolute value calculation step and the output obtained by the second 1's complement absolute value calculation step, adding 1 to the sum, and outputting the addition result.

10. A calculation method according to claim 6, further comprising a zero value determination step of determining whether the output obtained by the indication information step is 0 or not, wherein the selection step includes the step of selecting and outputting the second value as a value having a larger absolute value when the value obtained by the indication information step is negative or when the value obtained by the indication information step is 0 and the sign of the second value is negative, and selecting and outputting the first value otherwise.

11. A processor, comprising:
a data bus section (2); and
a control section (1) for controlling the data bus section (2),
wherein:
the control section (1) includes:
an execution instruction storage device (4) for storing an execution instruction, and
a decoding device (5) for outputting a control signal obtained by decoding the execution instruction read from the execution instruction storage device (4) and
the data bus section (2) includes a calculation device according to claim 1.

12. A processor according to claim 11, wherein the selection device (33) selects and outputs either the first value or the second value which has a positive sign when the absolute value of the first value and the absolute value of the second value are equal to each other and the sign of the first value and the sign of the second value are different from each other.

## Patentansprüche

1. Rechenvorrichtung zum Empfangen einer 2er Komplement Darstellung eines ersten Werts und einer 2er Komplement Darstellung eines zweiten Werts und zum Ausgeben einer Information, welche angibt, welcher eines absoluten Werts des ersten Werts oder eines absoluten Werts des zweiten Werts größer ist, wobei die Berechnungsvorrichtung aufweist:
eine erste 1er Komplement Absolutwert-Berechnungsvorrichtung (20) zum Umwandeln des ersten Werts in eine 1er Komplement Darstellung und zum Ausgeben der erhaltenen 1er Komplement Darstellung, wenn ein Vorzeichen des ersten Werts negativ ist, und zum Ausgeben des ersten Werts wie er ist, wenn das Vorzeichen des ersten Wertes nicht negativ ist;
eine zweite 1er Komplement Absolutwert-Berechnungsvorrichtung (21) zum Umwandeln des zweiten Werts in eine 1er Komplement Darstellung und zum Ausgeben der erhaltenen 1er Komplement Darstellung, wenn ein Vorzeichen des zweiten Werts negativ ist, und zum Ausgeben des zweiten Werts wie er ist, wenn das Vorzeichen des zweiten Werts nicht negativ ist; und
eine Anzeigeinformations-Ausgabevorrichtung (22) zum Ausgeben einer Anzeigeinformation, welche anzeigt, welcher des absoluten Werts des ersten Werts oder des absoluten Werts des zweiten Werts größer ist, basierend auf der Ausgabe der ersten 1er Komplement Absolutwert-Berechnungsvorrichtung (20) und der Ausgabe der zweiten 1er Komplement Absolutwert-Berechnungsvorrichtung (21),
weiter aufweisend eine Auswahlvorrichtung (33) zum Ausgeben entweder des ersten Werts oder des zweiten Werts, welcher den größeren Absolutwert hat.

2. Rechenvorrichtung nach Anspruch 1, wobei wenn der Absolutwert des ersten Werts und der Absolutwert des zweiten Werts gleich zueinander sind und das Vorzeichen des ersten Werts und das Vorzeichen des zweiten Werts voneinander verschieden sind, wählt die Auswahlvorrichtung (33) aus und gibt entweder den ersten Wert oder den zweiten Wert aus, welcher ein positives Vorzeichen hat.

3. Rechenvorrichtung nach Anspruch 1, wobei die Anzeigeinformations-Ausgabevorrichtung (22) die Ausgabe der zweiten 1er Komplement Absolutwert-Berechnungsvorrichtung (21) von der Ausgabe der ersten 1er Komplement Absolutwert-Berechnungsvorrichtung (20) subtrahiert und das Subtraktionsergebnis ausgibt.

4. Rechenvorrichtung nach Anspruch 1, wobei:
die zweite 1er Komplement Absolutwert-Berechnungsvorrichtung (27) umfasst eine Inversionsvorrichtung (29) zum Invertieren von jedem der Bits der 1er Komplement Darstellung des zweiten Werts, wenn das Vorzeichen des zweiten Werts negativ ist, und zum Invertieren von jedem der Bits des zweiten Werts, wenn das Vorzeichen des zweiten Werts positiv ist,
die Anzeigeinformations-Ausgabevorrichtung (28) erhält eine Summe der Ausgabe der ersten 1er Komplement Absolutwert-Berechnungsvorrichtung (20) und der Ausgabe der zweiten 1er Komplement Absolutwert-Berechnungsvorrichtung (27), addiert 1 zu der Summe, und gibt das Additionsergebnis aus.

5. Rechenvorrichtung nach Anspruch 1, weiter aufweisend eine Nullwert-Bestimmungsvorrichtung (34) zum Bestimmen, ob die Ausgabe der Anzeigeinformations-Ausgabevorrichtung (13) 0 ist oder nicht, wobei die Auswahlvorrichtung (35) den zweiten Wert auswählt und ausgibt, wenn die Ausgabe der Anzeigeinformations-Ausgabevorrichtung (13) negativ ist oder wenn die Ausgabe der Anzeigeinformations-Ausgabevorrichtung (13) 0 ist und das Vorzeichen des zweiten Werts negativ ist, und wählt sonst den ersten Wert aus und gibt ihn aus.

6. Berechnungsverfahren zum Herausfinden welcher eines absoluten Werts einer 2er Komplement Darstellung eines ersten Werts oder eines absoluten Werts einer 2er Komplement Darstellung eines zweiten Werts größer ist, wobei das Berechnungsverfahren aufweist:
einen ersten 1er Komplement Absolutwert-Berechnungsschritt zum Umwandeln des ersten Werts in eine 1er Komplement Darstellung, wenn ein Vorzeichen des ersten Werts negativ ist, und zum Beibehalten des ersten Werts wie er ist, wenn das Vorzeichen des ersten Wertes nicht negativ ist;
einen zweiten 1er Komplement Absolutwert-Berechnungsschritt zum Umwandeln des zweiten Werts in eine 1er Komplement Darstellung, wenn ein Vorzeichen des zweiten Werts negativ ist und zum Beibehalten des zweiten Werts wie er ist, wenn das Vorzeichen des zweiten Werts nicht negativ ist; und
einen Anzeigeinformationsschritt zum Auffinden einer Anzeigeinformation, welche anzeigt, welcher, der Absolutwert des ersten Werts oder der Absolutwert des zweiten Werts größer ist, basierend auf dem Wert, welcher erhalten wurde durch den ersten 1er Komplement Absolutwert-Berechnungsschritt und dem Wert, welcher erhalten wurde durch den zweiten 1er Komplement Absolutwert-Berechnungsschritt,
weiter aufweisend einen Auswahlschritt zum Auswählen entweder des ersten Werts oder des zweiten Werts, welcher den größeren Absolutwert hat.

7. Berechnungsverfahren nach Anspruch 6, wobei der Auswahlschritt den Schritt umfasst, wenn der Absolutwert des ersten Wertes und der Absolutwertes des zweiten Wertes gleich zueinander sind und das Vorzeichen des ersten Wertes und das Vorzeichen des zweiten Werts verschieden voneinander sind, auswählen entweder des ersten Wertes oder des zweiten Wertes, welcher ein positives Vorzeichen hat, als einen Wert, welcher einen größeren Absolutwert hat.

8. Berechnungsverfahren nach Anspruch 6, wobei der Anzeigeinformationsschritt den Schritt des Subtrahierens der Ausgabe der zweiten 1er Komplement Absolutwert-Berechnungsvorrichtung von der Ausgabe der ersten 1er Komplement Absolutwert-Berechnungsvorrichtung und das Ausgeben des Subtraktionsergebnisses umfasst.

9. Berechnungsverfahren nach Anspruch 6, wobei:
der zweite 1er Komplement Absolutwert-Berechnungsschritt den Schritt des Invertierens von jedem der Bits der 1er Komplement Darstellung des zweiten Werts umfasst, wenn das Vorzeichen des zweiten Werts negativ ist, und das Invertieren von jedem der Bits des zweiten Werts umfasst, wenn das Vorzeichen des zweiten Werts nicht negativ ist,
der Anzeigeinformations-Ausgabeschritt umfasst den Schritt des Erhaltens einer Summe der Ausgabe erhalten durch den ersten 1er Komplement Absolutwert-Berechnungsschritt und der Ausgabe erhalten durch den zweiten 1er Komplement Absolutwert-Berechnungsschritt, Addieren von 1 zu der Summe, und Ausgeben des Additionsergebnisses.

10. Berechnungsverfahren nach Anspruch 6, weiter aufweisend einen Nullwertbestimmungsschritt zum Bestimmen, ob die Ausgabe, welche erhalten wurde durch den Anzeigeinformationsschritt, 0 ist oder nicht, wobei der Auswahlschritt den Schritt des Auswählens und Ausgebens des zweiten Werts als einen Wert umfasst, welcher einen größeren absoluten Wert hat, wenn der Wert, welcher erhalten wurde durch den Anzeigeinformationsschritt, negativ ist oder wenn der Wert, welcher erhalten wurde durch den Anzeigeinformationsschritt, 0 ist, und das Vorzeichen des zweiten Werts negativ ist, und Auswählen und Ausgeben des ersten Werts sonst.

11. Prozessor mit:
einem Datenbusabschnitt (2); und
einem Steuerabschnitt (1) zum Steuern des Datenbusabschnitts (2),
wobei:
der Steuerabschnitt (1) umfasst:
eine Ausführbefehl-Speichervorrichtung (4) zum Speichern eines Ausführbefehls, und
eine Dekodiervorrichtung (5) zur Ausgabe eines Steuersignals, erhalten durch das Dekodieren des Ausführbefehls, gelesen von der Ausführbefehl-Speichervorrichtung (4) und
der Datenbusabschnitt (2) umfasst eine Berechnungsvorrichtung nach Anspruch 1.

12. Prozessor nach Anspruch 11, wobei die Auswahlvorrichtung (33) entweder den ersten Wert oder den zweiten Wert auswählt und ausgibt, welcher ein positives Vorzeichen hat, wenn der Absolutwert des ersten Werts und der Absolutwert des zweiten Werts gleich zueinander sind, und das Vorzeichen des ersten Werts und das Vorzeichen des zweiten Werts verschieden voneinander sind.

## Revendications

1. Dispositif de calcul destiné à recevoir une représentation complémentaire des 2' d'une première valeur et une représentation complémentaire des 2' d'une deuxième valeur et à délivrer une information qui indique laquelle de la valeur absolue de la première valeur ou de la valeur absolue de la deuxième valeur est la plus grande, le dispositif de calcul comprenant :
un premier dispositif (20) de calcul de valeur absolue complémentaire des 1' destiné à convertir la première valeur en une représentation complémentaire des 1' et à délivrer la représentation complémentaire des 1' résultante quand le signe de la première valeur est négatif, et à délivrer la première valeur telle qu'elle est si le signe de la première valeur n'est pas négatif ;
un deuxième dispositif (21) de calcul de valeur absolue complémentaire des 1' destiné à convertir la deuxième valeur en une représentation complémentaire des 1' et à délivrer la représentation complémentaire des 1' résultante quand le signe de la deuxième valeur est négatif, et à délivrer la deuxième valeur telle qu'elle est si le signe de la deuxième valeur n'est pas négatif ; et
un dispositif (22) de sortie d'information d'indication destiné à délivrer une information d'indication qui indique laquelle de la valeur absolue de la première valeur ou de la valeur absolue de la deuxième valeur est la plus grande en se basant sur la sortie du premier dispositif (20) de calcul de valeur absolue complémentaire des 1' et sur la sortie du deuxième dispositif (21) de calcul de valeur absolue complémentaire des 1',
comprenant en outre un dispositif de sélection (33) destiné à délivrer soit la première valeur, soit la deuxième valeur, celle qui a la plus grande valeur absolue.

2. Dispositif de calcul selon la revendication 1, dans lequel, quand la valeur absolue de la première valeur et la valeur absolue de la deuxième valeur sont égales l'une à l'autre et que le signe de la première valeur et le signe de la deuxième valeur sont différents l'un de l'autre, le dispositif de sélection (33) sélectionne et délivre soit la première valeur, soit la deuxième valeur, qui a un signe positif.

3. Dispositif de calcul selon la revendication 1, dans lequel le dispositif (22) de sortie d'information d'indication soustrait la sortie du deuxième dispositif (21) de calcul de valeur absolue complémentaire des 1' de la sortie du premier dispositif (20) de calcul de valeur absolue complémentaire des 1', et délivre le résultat de la soustraction.

4. Dispositif de calcul selon la revendication 1, dans lequel :
le deuxième dispositif (27) de calcul de valeur absolue complémentaire des 1' comprend un dispositif d'inversion (29) destiné à inverser chacun des éléments binaires de la représentation complémentaire des 1' de la deuxième valeur quand le signe de la deuxième valeur est négatif, et à inverser chacun des éléments binaires de la deuxième valeur quand le signe de la deuxième valeur est positif,
et dans lequel le dispositif (28) de sortie d'information d'indication obtient la somme de la sortie du premier dispositif (20) de calcul de valeur absolue complémentaire des 1' et de la sortie du deuxième dispositif (27) de calcul de valeur absolue complémentaire des 1', ajoute 1 à la somme, et délivre le résultat de l'addition.

5. Dispositif de calcul selon la revendication 1 comprenant en outre un dispositif (34) de détermination de valeur zéro destiné à déterminer si la sortie du dispositif (13) de sortie d'information d'indication est 0 ou non, dans lequel le dispositif (35) sélectionne et délivre la deuxième valeur quand la sortie du dispositif (13) de sortie d'information est négative ou quand la sortie du dispositif (13) de sortie d'information d'indication est 0 et que le signe de la deuxième valeur est négatif, et sélectionne et délivre la première valeur dans le cas contraire.

6. Procédé de calcul destiné à trouver laquelle de la valeur absolue de la représentation complémentaire des 2'd'une première valeur et de la valeur absolue de la représentation complémentaire des 2' d'une deuxième valeur est la plus grande, le procédé de calcul comprenant :
une première étape de calcul de valeur absolue complémentaire 1's consistant à convertir la première valeur en une représentation complémentaire des 1' quand le signe de la première valeur est négatif et à maintenir la première valeur telle qu'elle est quand le signe de la première valeur n'est pas négatif ;
une deuxième étape de calcul de valeur absolue complémentaire des 1' consistant à convertir la deuxième valeur en une représentation complémentaire des 1' quand le signe de la deuxième valeur est négatif et à maintenir la deuxième valeur telle qu'elle est quand le signe de la deuxième valeur n'est pas négatif ; et
une étape d'information d'indication consistant à trouver une information d'indication qui indique laquelle de la valeur absolue de la première valeur ou de la valeur absolue de la deuxième valeur est la plus grande en se basant sur la valeur obtenue par la première étape de calcul de valeur absolue complémentaire des l' et sur la valeur obtenue par la deuxième étape de calcul de valeur absolue complémentaire des l',
comprenant en outre une étape de sélection consistant à sélectionner soit la première valeur, soit la deuxième valeur, celle qui a la plus grande valeur absolue.

7. Procédé de calcul selon la revendication 6, dans lequel l'étape de sélection comprend l'étape consistant, quand la valeur absolue de la première valeur et la valeur absolue de la deuxième valeur sont égales l'une à 1' autre et que le signe de la première valeur et le signe de la deuxième valeur sont différents l'un de l'autre, à choisir soit la première valeur, soit la deuxième valeur, celle qui est de signe positif, comme valeur ayant la valeur absolue la plus grande.

8. Procédé de calcul selon la revendication 6, dans lequel l'étape d'information d'indication comprend l'étape consistant à soustraire la sortie du deuxième dispositif de calcul de valeur absolue complémentaire des 1' de la sortie du premier dispositif de calcul de valeur absolue complémentaire des 1' et à délivrer le résultat de la soustraction.

9. Procédé de calcul selon la revendication 6, dans lequel :
la deuxième étape de calcul de la valeur absolue complémentaire des 1 comprend l'étape consistant à inverser chacun des éléments binaires de la représentation complémentaire des 1' de la deuxième valeur quand le signe de la deuxième valeur est négatif, et à inverser chacun des éléments binaires de la deuxième valeur quand le signe de la deuxième valeur n'est pas négatif,
et dans lequel l'étape de sortie de l'information d'indication comprend l'étape consistant à obtenir la somme de la sortie obtenue par la première étape de calcul de valeur absolue complémentaire des l' et la sortie obtenue par la deuxième étape de calcul de valeur absolue complémentaire des l' à ajouter 1 à la somme, et à délivrer le résultat de l'addition.

10. Procédé de calcul selon la revendication 6, comprenant en outre une étape de détermination de valeur zéro consistant à déterminer si la sortie obtenue par l'étape d'information d'indication est 0 ou non, dans lequel l'étape de sélection comprend l'étape consistant à sélectionner et à délivrer la deuxième valeur comme valeur ayant la valeur absolue la plus grande quand la valeur obtenue par l'étape d'indication d'information est négative ou quand la valeur obtenue par l'étape d'indication d'information est 0 et que le signe de la deuxième valeur est négatif, et à sélectionner et à délivrer la première valeur dans le cas contraire.

11. Processeur, comprenant :
une section de bus de données (2) ; et
une section de commande (1) destinée à commander la section de bus de données (2),
dans lequel :
la section de commande (1) comprend :
un dispositif (4) de mémorisation d'instruction d'exécution destiné à la mémorisation d'une instruction d'exécution, et
un dispositif décodeur (5) destiné à
délivrer un signal de commande obtenu par décodage de l'instruction d'exécution lue dans le dispositif (4) de mémorisation d'instruction d'exécution et
dans lequel la section de bus de données (2) comprend un dispositif de calcul selon la revendication 1.

12. Processeur selon la revendication 11, dans lequel le dispositif de sélection (33) sélectionne et délivre soit la première valeur, soit la deuxième valeur, celle qui est de signe positif, quand la valeur absolue de la première valeur et la valeur absolue de la deuxième valeur sont égales l'une à l'autre et que le signe de la première valeur et le signe de la deuxième valeur sont différents l'un de l'autre.
